(19) Europäisches Patentamt
European Patent Office
Office européen des brevets

(11) **EP 3 765 824 B1**

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(21) Anmeldenummer: **19709641.5**

(22) Anmeldetag: **27.02.2019**

(51) Internationale Patentklassifikation (IPC):
**G01D 5/353** (2006.01)   **G01K 11/32** (2021.01)
**G01L 1/24** (2006.01)

(52) Gemeinsame Patentklassifikation (CPC):
**G01D 5/35361; G01B 11/18; G01K 11/32; G01L 1/242**

(86) Internationale Anmeldenummer:
**PCT/EP2019/054807**

(87) Internationale Veröffentlichungsnummer:
**WO 2019/174915 (19.09.2019 Gazette 2019/38)**

(54) **VERFAHREN ZUM VORZEICHENRICHTIGEN BESTIMMEN EINER ÄNDERUNG EINES PHYSIKALISCHEN PARAMETERS UND VORRICHTUNG MIT EINER OPTISCHEN FASER**

METHOD FOR DETERMINING, WITH THE CORRECT SIGN, A CHANGE IN A PHYSICAL PARAMETER, AND DEVICE HAVING AN OPTICAL FIBER

PROCÉDÉ DE DÉTERMINATION DU SIGNE CORRECT D'UNE VARIATION DE PARAMÈTRE PHYSIQUE ET DISPOSITIF COMPORTANT UNE FIBRE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2018 DE 102018105905**

(43) Veröffentlichungstag der Anmeldung:
**20.01.2021 Patentblatt 2021/03**

(73) Patentinhaber: **Bundesrepublik Deutschland, Vertreten Durch Die Bundesministerin für Wirtschaft und Energie, Diese vertreten durch den Präsidenten der 12205 Berlin (DE)**

(72) Erfinder: **LIEHR, Sascha**
**12051 Berlin (DE)**

(74) Vertreter: **Zimmermann & Partner Patentanwälte mbB Postfach 330 920 80069 München (DE)**

(56) Entgegenhaltungen:
**WO-A1-2016/033199   WO-A1-2017/087792**

- **JI XIONG ET AL: "Chirped-pulse coherent-OTDR with predistortion", JOURNAL OF OPTICS, INSTITUTE OF PHYSICS PUBLISHING, BRISTOL GB, Bd. 20, Nr. 3, 25. Januar 2018 (2018-01-25), Seite 34001, XP020324946, ISSN: 2040-8986, DOI: 10.1088/2040-8986/AAA6FE [gefunden am 2018-01-25]**
- **JUAN PASTOR-GRAELLS ET AL: "Chirped-Pulse Phase-Sensitive Reflectometer Assisted by First-Order Raman Amplification", JOURNAL OF LIGHTWAVE TECHNOLOGY, Bd. 35, Nr. 21, 12. Oktober 2017 (2017-10-12), Seiten 4677-4683, XP055587404, USA ISSN: 0733-8724, DOI: 10.1109/JLT.2017.2756558**
- **J. PASTOR-GRAELLS ET AL: "Single-shot distributed temperature and strain tracking using direct detection phase-sensitive OTDR with chirped pulses", OPTICS EXPRESS, Bd. 24, Nr. 12, 7. Juni 2016 (2016-06-07), Seite 13121, XP055587402, DOI: 10.1364/OE.24.013121**

EP 3 765 824 B1

**Beschreibung**

Die vorliegende Erfindung betrifft ein Verfahren zum vorzeichenrichtigen Bestimmen einer Änderung eines physikalischen Parameters, insbesondere ein faseroptisches Verfahren zum verteilten und vorzeichenrichtigen Bestimmen einer Dehnungsänderung sowie eine entsprechende Vorrichtung mit einer optischen Faser.

Verteilte faseroptische Sensoren haben eine breite Palette von Anwendungen in verschiedenen Bereichen gefunden, von der Bauwerksüberwachung, dem Öl- und Gassektor und der Überwachung des Stromnetzes bis hin zu geotechnischen, oder chemischen Anwendungen. Nichtlineare Streuphänomene in Glasfaserkabeln, wie z.B. Raman- und Brillouin-Streuung, werden häufig für statische (Fern-) Temperatur- (Raman) und Dehnungs-/Temperatur- (Brillouin) Messanwendungen verwendet.

Die Veröffentlichung JI XIONG ET AL: "Chirped-pulse coherent-OTDR with predistortion",JOURNAL OF OPTICS, INSTITUTE OF PHYSICS PUBLISHING, BRISTOL GB, Bd. 20, Nr. 3, 25. Januar 2018 (2018-01-25), Seite 34001, XP020324946,ISSN: 2040-8986, DOI: 10.1088/2040-8986/AAA6FE befasst sich mit Laser-Pulsen variabler Frequenz in kohärenter optischer Reflektometrie im Zeitbereich (c-OTDR).

Die Veröffentlichung JUAN PASTOR-GRAELLS ET AL: "Chirped-Pulse Phase-Sensitive Reflectometer Assisted by First-Order Raman Amplification",JOURNAL OF LIGHTWAVE TECHNOLOGY, Bd. 35, Nr. 21, 1. November 2017 (2017-11-01), Seiten 4677-4683, XP055587404,USA ISSN: 0733-8724, DOI: 10.1109/JLT.2017.2756558 befasst sich mit phasensensitiver Reflektometrie.

Eine hochauflösende Dehnungsmessung kann über interferometrische Rayleigh-Rückstreuungsansätze auch für hohe Abtastraten (dynamische Messung) erreicht werden. Diese Techniken der verteilten Vibrationssensorik (DVS, von engl. Distributed Vibration Sensing), oft auch als verteilte akustische Sensorik (DAS, von engl. Distributed Acoustic Sensing) bezeichnet, basieren typischerweise auf der kohärenten optischen Zeitbereichsreflektometrie (C-OTDR, von engl. coherent optical time domain reflectometry) unter Verwendung einer kohärenten optischen Anregungsquelle, und haben in den letzten Jahren sowohl in der Forschung als auch in der industriellen Anwendung einige Fortschritte erzielt. Die Untersuchung der Faser mit kohärenten Pulsen führt zu einer Interferenz der rückgestreuten Rayleigh-Leistung von Streuzentren (Rayleighstreuern), die sich innerhalb der Breite des sich vorwärts ausbreitenden optischen Pulses befinden. Die Faser ähnelt daher einem verteilten Mehrweginterferometer. Für stabile Faserbedingungen sind die C-OTDR-Rückstreusignale konstant. Kleinste Veränderungen der Abstände der Streuer, z.B. durch lokale Dehnungen oder Temperaturschwankungen, können als Funktion von rückgestreuten Leistungsschwankungen detektiert werden. Die Vorteile dieser interferometrischen DVS-Techniken liegen in der hohen Dehnungsempfindlichkeit, der hohen Messwiederholrate und dem großen Entfernungsbereich (oder: Messlängen/Sensorlängen). DVS-Techniken finden bisher in der hochauflösenden Schwingungsdetektion in der Öl- und Gasindustrie, in der Sicherheits- und Perimeterüberwachung sowie in geophysikalischen Applikationen breitere Anwendungen. Die Anwendung im Tiefbau und beim Gebäudemonitoring ("Structural Health Monitoring", SHM) ist eine neuere

Entwicklung. Die Anforderung an die Messwiederholrate ist bei Strukturüberwachungsanwendungen meist geringer, aber die Messung der korrekten Dehnungsgröße sowie des algebraischen Vorzeichens der Dehnungsänderung ist in der Regel erforderlich. Diese vorzeichenrichtige Messung ist z.B. Voraussetzung für die verteilte Deformationserkennung und Modalanalyse von schwingenden Strukturen wie Brücken, z.B. Stahlbetonbrücken. Der korrekte Dehnwert einschließlich des Vorzeichens kann von den bekannten DVS-Techniken jedoch nicht oder nur sehr aufwendig bestimmt werden.

Die Mehrheit der Rayleigh-basierten DVS-Prinzipien verwendet Single-Pulse- und Single-Wellenlängen-Direktdetektionsansätze, die nur eine Vibrationsdetektion erlauben. Eine quantitative Dehnungsmessung ist bei der differentiellen Leistungsänderungsauswertung aufgrund der zufälligen Streuverteilung in der Faser und damit einer unbekannten Dehnungsübertragungsfunktion nicht möglich. Es wurden komplexere Homodyn- und Heterodyn-Kohärenz-Detektionsmethoden vorgeschlagen, von denen einige die quantitative Detektion von Dehnungsänderungen ermöglichen. Andere phasenaufgelöste DVS-Techniken (phase-OTDR oder phi-OTDR) basieren z.B. auf Dual-Puls-Ansätzen. Auch Kreuz-Multiplikations-Demodulationstechniken oder phasenverschobene Pulse ermöglichen die quantitative Messung von Dehnungsänderungen. Obwohl diese phasenaufgelösten Techniken im Allgemeinen komplexer sind als einfache Direktdetektionsansätze, und z.B. Laser mit schmaler Linienbreite, zusätzliche Modulatoren, GHz-Frequenzquellen, zusätzliche Interferometer und Stabilisierung, Polarisationsmanagement, symmetrische Detektion oder Detektion mit hoher Bandbreite erfordern, können sie im Allgemeinen nicht das gewünschte Vorzeichen der Dehnungsänderung bestimmen.

Zwar könnten auf Brillouin-Streuung basierende Methoden für eine absolute Dehnungsmessung einschließlich der Vorzeicheninformation eingesetzt werden. Sie sind aber für viele Anwendungen keine Alternative, da die Dehnungsauflösung typischerweise um Größenordnungen niedriger ist als bei den interferometrischen DVS-Techniken.

Im Hinblick auf das oben Gesagte, schlägt die vorliegende Erfindung ein Verfahren gemäß Anspruch 1 und eine Vorrichtung gemäß Anspruch 13 vor.

Gemäß einem Ausführungsbeispiel umfasst ein Verfahren zum vorzeichenrichtigen Bestimmen einer Änderung eines physikalischen Parameters ein Einkoppeln einer ersten Pulsfolge in eine optische Faser, die zumindest in einem Abschnitt Rayleighstreuer aufweist, sodass die erste Pulsfolge mehrere in der optischen Faser jeweils zumindest im Wesentlichen kohärente optische Pulse gleicher Pulsdauer aufweist, wobei sich eine optische Frequenz der Pulse in der ersten Pulsfolge streng monoton, ändert. Es wird ein erstes Leistungsspektrum bestimmt. Das Bestimmen des ersten Leistungsspektrums umfasst ein Messen einer jeweiligen Leistung eines von den Rayleighstreuern rückgestreuten Signalanteils für jeden der optischen Pulse der ersten Pulsfolge. Es wird eine zweite Pulsfolge in die optische Faser eingekoppelt. Die zweite Pulsfolge entspricht zumindest im Wesentlichen der ersten Pulsfolge, einer Permutation der ersten Pulsfolge, einem Teil der ersten Pulsfolge oder einer Permutation des Teils der ersten Pulsfolge und/oder eine optische Frequenz in der zweiten Pulsfolge ändert sich streng monoton. Es wird ein zweites Leistungsspektrums bestimmt. Das Bestimmen des zweiten Leistungsspektrums umfasst ein Messen einer jeweiligen Leistung eines von den Rayleighstreuern rückgestreuten Signalanteils für jeden der optischen Pulse der zweiten Pulsfolge. Es erfolgt ein vorzeichenrichtiges Bestimmen einer Änderung eines physikalischen Parameters der optischen Faser. Das vorzeichenrichtige Bestimmen der Änderung des physikalischen Parameters umfasst ein Bestimmen eines Versatzes zwischen dem zweiten Leistungsspektrum und dem ersten Leistungsspektrum. Das Einkoppeln der jeweiligen Pulsfolge umfasst ein monotones Ändern, d.h. entweder ein monotones Verringern oder ein monotones Erhöhen, typischerweise ein streng monotones Ändern, d.h. ein streng monotones Verringern oder ein streng monotones Erhöhen, eines Speisestroms und/oder einer Temperatur eines mit der optischen Faser gekoppelten Dauerstrichlasers.

Das Einkoppeln der jeweiligen Pulsfolge umfasst typischerweise ein Erzeugen und Einleiten einer Pulsfolge in die optische Faser.

Da die optische Frequenz/Wellenlänge des Dauerstrichlasers sowohl vom Speisestrom (der auch als Pumpstrom und Injektionsstrom bezeichnet wird) als auch der Temperatur des Dauerstrichlasers (streng monoton) abhängt, kann die Wellenlänge des Dauerstrichlasers sowohl durch eine Änderung des Speisestroms als auch eine Änderung der Temperatur variiert werden. Da eine Änderung des Speisestroms eine schnellere Variation der Wellenlänge des Dauerstrichlasers erlaubt, wird typischerweise zum Erzeugen / Einkoppeln der ersten und zweiten Pulsfolge nur der Speisestrom geändert. Dabei kann vorgesehen sein, die Temperatur zu stabilisieren.

Typischerweise wird die optische Frequenz des Dauerstrichlasers über den Speisestrom (beim Erzeugen/Einkoppeln der Pulsfolgen) um zumindest 200 MHz, oder sogar 500 MHz, noch typischer um zumindest 1 GHz, und sogar noch typischer um zumindest 2 GHz oder sogar zumindest 5 GHz geändert.

Aus Gründen der Einfachheit wird in der folgenden Beschreibung das Erzeugen der Pulse der Pulsfolgen mit variierender (mittlerer) optischer Frequenz/Wellenlänge hauptsächlich mit Bezug zur Änderung des Speisestroms erläutert.

Typischerweise werden die jeweiligen Pulse aus einem Laserstrahlsignal des Dauerstrichlasers erzeugt, insbesondere mittels eines mit der optischen Faser gekoppelten Modulators für das Laserstrahlsignal. Bei dem typischerweise korreliert mit dem Speisestrom modulierten Modulator kann es sich beispielsweise um einen elektrooptischen oder akustikoptischen Modulator handeln (oder um einen optischen Halbleiterverstärker als Schalter).

Die Formulierung "zumindest im Wesentlichen kohärenter optischer Puls", wie sie vorliegend verwendet wird, soll einen optischen Puls mit einer Kohärenzlänge, die zumindest um einen Faktor 2, typischer zumindest um einen Faktor 5, und sogar noch typischer zumindest um einen Faktor 10 größer ist als eine Pulsbreite (Pulsdauer*Lichtgeschwindigkeit in der Faser), d.h. eine Ausdehnung des Pulses in der optischen Faser in Achsrichtung der optischen Faser, beschreiben.

Dementsprechend ist das Laserstrahlsignal typischerweise hinreichend schmalbandig (im Wesentlichen monochrom). Genauer gesagt, beträgt eine Kohärenzlänge (auch als Längenkohärenz bezeichnet) des Laserstrahlsignals typischerweise mindestens 1 m, mindestens 10 m oder sogar mindestens 50 m.

Typischerweise beträgt die Pulsdauer der Pulse höchstens 100 ns oder sogar höchstens 50 ns, noch typischer höchstens 20 ns, 10 ns oder sogar höchstens 5 ns.

Daher ist die Kohärenzlänge der Pulse typischerweise nur unwesentlich geringer ist als die Kohärenzlänge des Laserstrahlsignals bei konstantem Speisestrom.

Die Kohärenzlänge der optischen Pulse beträgt typischerweise zumindest 1 m, noch typischer zumindest 10 m oder sogar zumindest 50 m.

Bei dem Dauerstrichlaser handelt es sich typischerweise um einen Diodenlaser oder eine Laserdiode, z.B. eine IR-Laserdiode (Wellenlänge im Bereich zwischen 780 nm und 1 mm) oder eine Laserdiode im sichtbaren Spektralbereich des Lichts (von etwa 380 nm bis 780 nm). Laserdioden zeichnen sich unter anderem durch geringe Herstellungskosten, einen hohen Wirkungsgrad, eine einfache Stromversorgung, eine geringe Bandbreite des Laserlichts sowie eine gute Winkelkohärenz (Fokussierbarkeit) und gute Längenkohärenz aus. Damit lassen sich die Pulsfolgen zumindest im Wesentlichen kohärenter Pulse mittels Laserdioden besonders einfach, kostengünstig und gut über den Strom steuerbar erzeugen. Im Ergebnis kann ein besonders einfacher und kostengünstiger Aufbau mit einem direkt Strom-modulierten Dauerstrichlaser zum Wellenlängen-Scanning der optischen Faser (und anschließender Auswertung) bereitgestellt werden.

Bei der optischen Faser kann es sich um eine Glasfaser aber auch um eine Polymerfaser handeln. Typischerweise ist die optische Faser eine Monomodefaser (Singlemodefaser). Insbesondere kann es sich um eine Standard-Silikat-Monomodefaser. Es kann sich aber auch um eine Multimodefaser handeln. Die Rayleighstreuer können in dem Abschnitt der optischen Faser eine erhöhte Konzentration aufweisen. Die Rayleighstreuer können aber auch in der gesamten Faser (zumindest im Mittel entlang der Faserachse) gleichverteilt sein. Daher kann auch eine vergleichsweise kostengünstige Standard-Silikat-Monomodefaser ohne Einschränkung für die hierin beschriebenen Verfahren und Vorrichtung verwendet werden.

Dadurch, dass der Speisestrom (und/oder die Temperatur) des Dauerstrichlasers beim Erzeugen der Pulse einer jeweiligen Pulsfolge streng monoton verändert wird, ändert sich auch die (mittlere) Wellenlänge von Puls zu Puls in der Pulsfolge.

Die Formulierung, dass "die zweite Pulsfolge zumindest im Wesentlichen der ersten Pulsfolge oder einer Permutation der ersten Pulsfolge entspricht", wie sie vorliegend verwendet wird, soll beschreiben, dass zu jedem Puls mit einer jeweiligen (mittleren) Wellenlänge / optischen Frequenz in der ersten Pulsfolge ein Puls mit der gleichen (mittleren) Wellenlänge / optische Frequenz (und der gleichen Pulsdauer) in der zweiten Pulsfolge existiert (und umgekehrt). Typischerweise ist auch die Pulshöhe bzw. Intensität der Pulse in beiden Pulsfolgen gleich. Mit anderen Worten kann die zweite Pulsfolge der ersten Pulsfolge bis auf eine Reihenfolge der Pulse entsprechen. Die zweite Pulsfolge kann sogar identisch zur ersten Pulsfolge sein. Die Reihenfolge der Pulse in der zweiten Pulsfolge kann aber auch umgekehrt zur Reihenfolge der Pulse der ersten Pulsfolge sein (d.h. einer (zeitlich) invertierten ersten Pulsfolge entsprechen), beispielsweise dann, wenn die erste Pulsfolge mittels eines linear ansteigenden Speisestroms und die zweite Pulsfolge mittels eines linear fallenden Speisestroms erzeugt wird (oder umgekehrt).

Dass die erste Pulsfolge und die zweite Pulsfolge jeweils Pulse unterschiedlicher und bekannter (mittlerer) Wellenlänge (optischen Frequenz) enthalten, ermöglicht (analog zu interferometrischen Verfahren) auch eine zuverlässige Bestimmung der Vorzeicheninformationen der Änderung des physikalischen Parameters und damit ein vorzeichenrichtiges Bestimmen der Änderung des physikalischen Parameters der optischen Faser.

Typischerweise enthalten die erste und zweite Pulsfolge jeweils zumindest 10 Pulse, noch typischer jeweils zumindest 50 Pulse, und sogar noch typischer jeweils zumindest einhundert Pulse, zum Beispiel 150 oder 200 Pulse.

Mit der Erhöhung der Anzahl der Pulse in den Pulsfolgen kann die Genauigkeit der Bestimmung der Änderung des physikalischen Parameters erhöht werden.

Die zeitliche Dauer der jeweiligen Pulsfolgen kann höchstens 250 ms (Millisekunde), typischerweise höchstens 50 ms oder sogar höchstens 1 ms betragen. Die zeitliche Dauer der jeweiligen Pulsfolgen kann sogar in einem Bereich von 0,1 ms bis 1 ms liegen. Dies ermöglicht extrem schnelle (dynamische) Messungen der Änderung des physikalischen Parameters.

Da die Leistungswerte im ersten Leistungsspektrums und im zweiten Leistungsspektrum in der optischen Faser typischerweise ortsaufgelöst bestimmt werden, d. h. hinreichend schnell, z.B. mit einer zeitlichen Auflösung von typischerweise zumindest 50 ns, noch typischer zumindest 10 ns, und sogar noch typischer zumindest 1 ns detektiert werden, kann auch die Änderung des physikalischen Parameters mit entsprechender Ortsauflösung für viele Orte in der optischen Faser über ein Vergleich der jeweiligen ortsabhängigen ersten und zweiten Leistungsspektren vorzeichenrichtig bestimmt werden. Beispielsweise kann die Ortsauflösung (in Richtung der Faserachse) zumindest 5 m, zumindest 1 m oder sogar zumindest 0,1 m betragen.

Der Begriff Leistungsspektrum wie er vorliegend verwendet wird soll (wie in der Optik üblich) eine Verteilungsfunktion eine Strahlungsleistung als Funktion einer Frequenz der Strahlung oder einer Wellenlänge der Strahlung beschreiben. Insbesondere kann das Leistungsspektrum eine entsprechende (geordnete) Tabelle von Messwerten, eine interpolierte Tabelle oder einer mittels Regressionsanalyse angepasste, entsprechende Modellfunktion aufweisen. Aus Gründen der Einfachheit wird in der folgenden Beschreibung davon ausgegangen, dass die Leistungsspektren eine Verteilungsfunktion der Strahlungsleistung (analog der Rückstreuleistung) als Funktion der Frequenz repräsentieren. Es versteht sich jedoch, dass die im Folgenden beschriebenen Verfahren entsprechend modifiziert auch für Leistungsspektren, die eine Verteilungsfunktion der Strahlungsleistung als Funktion der Wellenlänge repräsentieren, angewendet werden können, da Frequenz und Wellenlänge einfach ineinander umrechenbar sind.

Es versteht sich weiterhin, dass unabhängig davon, ob die Reihenfolge der optischen Frequenz/Wellenlänge den Pulsfolgen unterschiedlich ist, die Reihenfolge der optischen Frequenz/Wellenlänge in den Leistungsspektren identisch ist. Dies kann gegebenenfalls durch Umordnen erreicht werden.

Typischerweise dient das erste Leistungsspektrum als Referenzspektrum (Referenzleistungsspektrum) und das zweite Leistungsspektrum als Änderungsspektrum (Änderungsleistungsspektrum). Außerdem können mehrere, zeitlich voneinander beabstandete weitere zweite Leistungsspektren bestimmt werden. Es ist aber auch möglich, dass eines der zweiten Leistungsspektren als neues Referenzspektrum für ein folgendes zweites Leistungsspektrum, mehrere oder sogar alle folgenden zweiten Leistungsspektren dient.

Beides ermöglicht eine zeitabhängige Untersuchung der Änderung des physikalischen Parameters.

Referenzspektrum (erstes Leistungsspektrum) und Änderungsspektrum (zweites Leistungsspektrum) können für den gleichen Frequenzbereich (der optischen Frequenzen), sogar für die gleichen optischen Frequenzen bestimmt werden.

Es kann aber auch vorgesehen sein, das Referenzspektrum für einen größeren Frequenzbereich als das Änderungsspektrum zu bestimmen. Dementsprechend kann die Pulsfolge zur Erzeugung des Referenzspektrums (erste Pulsfolge) einen größeren Bereich optischer Frequenzen abdecken als die Pulsfolge zur Erzeugung des Änderungsspektrums (zweite Pulsfolge). Das Änderungsspektrum kann dann mit dem breiteren Änderungsspektrum "korreliert" werden. Dies erlaubt eine einfache Erweiterung des Messbereiches bei gleichzeitiger Verbesserung des Ergebnisses durch eine komplette "Abdeckung" des Änderungsspektrums mit dem Referenzspektrum.

Gemäß einer Weiterbildung umfasst das Verfahren ein Befestigen an, insbesondere ein Einbetten der optischen Faser in ein zu untersuchendes bzw. zu überwachendes Objekt, insbesondere einem Bauwerk.

Alternativ dazu können auch bereits vorhandene optische Fasern (Glasfaserkabel) als Sensor verwendet werden, insbesondere zur Bauwerksüberwachung und/oder Messungen von Bodenbewegungen, seismische Signale, Dehnung und/oder Temperatur in Stromkabeln.

Dies ermöglicht eine Untersuchung bzw. ein Monitoring des Objektes über ein zeitliches Verfolgen der Änderung des physikalischen Parameters der optischen Faser.

Da der physikalische Parameter typischerweise eine Dehnung oder eine Temperatur bzw. eine von beiden Parameter abgeleitete Größe ist, z.B. eine Feuchte oder Biegung, kann bei einer zusätzlichen, unabhängigen, relativ einfach zu realisieren Temperaturmessung des Objektes mittels eines oder mehrerer Temperatursensoren, z.B. mittels eines entsprechenden faseroptischen Sensors (Raman- oder Brillouin-Sensors), ein schnelles, genaues und sogar ortsaufgelöstes Monitoring der Länge bzw. der Dehnung des Objektes realisiert werden.

Je nach Anwendung kann das zweite Leistungsspektrum bis zu zumindest mehrere Male pro Millisekunde bestimmt werden.

Aufgrund der im Folgenden ebenfalls detaillierter beschriebenen effizienten Auswertealgorithmen kann sogar das vorzeichenrichtige Bestimmen der Änderung des physikalischen Parameters bis zu zumindest einmal oder sogar mehrere Male pro Millisekunde erfolgen.

Es ist natürlich auch möglich, dass das zweite Leistungsspektrum bzw. das Bestimmen der Änderung des physikalischen Parameters nur mehrere hundert Male pro Sekunde, mehrere Male pro Sekunde oder mit einer noch größeren Taktung erfolgt. Beispielweise kann die Änderung des physikalischen Parameters bei der Überwachung von Bauwerken wie Gebäuden, Brücken und Deichen unter Normalbedingungen auch Minuten- oder Stundentakt erfolgen.

Das im Folgenden detaillierter beschriebene vorzeichenrichtige Bestimmen der Änderung des physikalischen Parameters vereinfacht sich typischerweise, wenn sich die optische Frequenz der Pulse innerhalb der jeweiligen Pulsfolge (zumindest im Wesentlichen bzw. in sehr guter Näherung, zum Beispiel mit einer Abweichung von weniger als 2 %, typischer von weniger als einem Prozent) linear mit dem Pulsindex ändert (und sich die optische Frequenzänderung damit zwischen benachbarten Pulsen nicht oder nur unwesentlich ändert).

Daher kann vorab (vor dem Einkoppeln der ersten Pulsfolge) eine Kalibrierungskurve, die die optische Frequenz des Dauerstrichlasers als Funktion des Speisestroms (i) beschreibt, bestimmt werden. Dazu kann der Speisestrom des Dauerstrichlasers variiert werden und die jeweils resultierende Laserstrahlung des Dauerstrichlasers in ein Interferometer mit bekannter Phasendifferenz eingekoppelt werden und die resultierende optische Frequenzänderung des Lasers interferometrisch bestimmt werden.

Mittels der Kalibrierungskurve können etwaige Abweichungen des linearen Verhaltens zwischen dem Speisestrom und der optischen Frequenz (in einer doppelt-logarithmisch Darstellung) des Dauerstrichlasers berücksichtigt werden. Die Abhängigkeit der optischen Frequenz einer Laserdiode vom Speisestrom kann oberhalb einer kritischen Stromstärke als Polynom ausgedrückt werden. Aus Gründen der Einfachheit wird im Folgenden vereinfachend häufig jedoch von einer linearen Abhängigkeit gesprochen, die jedoch nur in doppelt logarithmischer Darstellung und zudem häufig nur näherungsweise gilt. Abweichung des linearen Verhaltens in der doppelt logarithmischen Darstellung können bspw. von einer nichtlinearen Änderung des Laserstromes vom bereitgestellten Modulationssignal verursacht werden.

Gemäß einem Ausführungsbeispiel wird die Kalibrierungskurve zu einer Korrektur des zeitlichen Verlaufs des Speisestroms beim Einkoppeln der jeweiligen Pulsfolge verwendet, die sicherstellt, dass sich die optische Frequenz der Pulse der Pulsfolge linear (streng monoton ansteigend oder fallend) mit der Zeit /dem Pulsindex ändert.

Gemäß einem weiteren Ausführungsbeispiel, in dem der Speisestrom beim Einkoppeln der jeweiligen Pulsfolge typischerweise linear geändert wird, werden die bestimmten jeweiligen Leistungsspektren entsprechend der Kalibrierungskurve korrigiert. Dies wird typischerweise durch numerische Interpolation erreicht. Diese Korrektur bzw. Interpolation kann ebenfalls mittels eines trainierten künstlichen neuronalen Netzes erreicht werden. Durch Verwenden des trainierten künstlichen neuronalen Netzes kann die Korrektur bzw. Interpolation besonders schnell ausgeführt werden.

Das Bestimmen des Versatzes zwischen dem jeweiligen zweiten Leistungsspektrum und dem ersten Leistungsspektrum kann mittels einer Korrelationsanalyse der Leistungsspektren erfolgen, insbesondere einer Korrelation entlang der Frequenzachse (bzw. Wellenlängenachse) zum Beispiel mittels einer entsprechenden Kreuzkorrelation bzw. des Pearson-Korrelationskoeffizienten. Die Berechnung dieser Kreuzkorrelationen ist jedoch numerisch relativ aufwendig und stellt daher insbesondere für sehr schnelle Bestimmungen der Änderung des physikalischen Parameters hohe Anforderungen an die verwendete Hardware.

Es hat sich gezeigt, dass der Versatz zwischen dem jeweiligen zweiten Leistungsspektrum und dem ersten Leistungsspektrum sehr genau, extrem schnell und mit vergleichsweise geringem Aufwand (nach der Trainingsphase) mittels trainierter, mehrschichtiger künstlicher neuronaler Netzwerke, die die beiden Spektren als Eingaben für eine neuronale Eingangsschicht präsentiert bekommen und den Versatz in einer neuronalen Ausgabeschicht ausgeben. Dabei haben sich wohl vollständig vernetzte neuronale Netzwerke (sogenannte mehrschichtige Perceptrons mit einer oder mehreren verborgenen Schichten von Neuronen) als auch so genannte faltende neuronale Netzwerke, die auch als CNNs (von engl.: Convolutional Neural Networks) bezeichnet werden, mit einer oder mehreren verborgenen Faltungsschichten (engl.: "convolutional layer") als besonders geeignet erwiesen. Es können aber auch trainierte rückgekoppelte neuronale Netze, die auch als RNNs bezeichnet werden (von engl. "recurrent neural networks"), zur effizienten Versatzbestimmung verwendet werden.

Insbesondere CNNs und RNNs erlauben zudem beim vorzeichenrichtigen Bestimmen der Änderung des physikalischen Parameters eine effiziente Berücksichtigung sowohl von jeweils örtlich benachbarten Leistungsspektren als auch von jeweils zeitlich benachbarten Leistungsspektren (3D-Datenanalyse). Dadurch kann die Änderung des physikalischen Parameters bzw. der physikalischen Parameter mit weiter erhöhter Genauigkeit und/oder Zuverlässigkeit bestimmt werden.

Insbesondere in einer Steuer- und Auswerteeinheit können die neuronalen Netzwerke als Software, Firmware, Hardware oder einer beliebigen Kombination davon implementiert sein.

Alternativ zur Verwendung neuronaler Netzwerke kann zum effizienten Bestimmen des Versatzes eine Berechnung quadratischer bzw. absoluter Abstände zueinander frequenzverschobener erster und zweiter Leistungsspektren erfolgen.

Dazu kann der (quadratische) Abstand zwischen einem um eine (von null verschiedene) Frequenzverschiebung verschobenen ersten Leistungsspektrum und dem zweiten Leistungsspektrum oder zwischen dem ersten Leistungsspektrum und einem um die Frequenzverschiebung verschobenen zweiten Leistungsspektrum berechnet werden.

Durch Summieren der (quadratischen) Abstände von relativ zueinander um in den Leistungsspektren auftretende (linear variierende) Frequenzen bzw. Frequenzverschiebungen verschobene erste und zweite Leistungsspektrum kann eine von der Anzahl der Summanden abhängige Korrelationsfunktion berechnet werden.

Zum Bestimmen des jeweiligen Versatzes zwischen den Leistungsspektren kann die Korrelationsfunktion als Funktion der Summanden minimiert und mit der von der Position im Leistungsspektrum unabhängigen Frequenzverschiebung zwischen benachbarten Frequenzen bzw. Frequenzverschiebungen multipliziert werden.

Eine noch höhere Genauigkeit lässt sich erzielen, wenn die Korrelationsfunktion vor dem Minimieren interpoliert wird.

Außerdem kann die Änderung des physikalischen Parameters in einer darauffolgenden Messung typischerweise noch genauer und in einen größeren Bereich bestimmt werden, wenn das Referenzspektrum (erste Leistungsspektrum) um Wertepaare von Peaks oder andere Spektrumsabschnitte eines zweiten Leistungsspektrums ergänzt wird, für die es (noch) keine Entsprechung im Referenzspektrum (ersten Leistungsspektrum) gibt.

Alternativ und/oder ergänzend zur beschriebenen Korrelationsanalyse entlang der optischen Frequenzachse/Wellenlängenachse kann auch eine entsprechende Korrelationsanalyse entlang der Zeitachse für unterschiedliche optische Frequenzen (Wellenlängen) vorgenommen werden. Eine Korrelationsanalyse entlang der Zeitachse für zumindest zwei unterschiedliche optische Frequenzen (Wellenlängen) erlaubt ebenfalls ein vorzeichenrichtiges Berechnen/Bestimmen der Änderung des physikalischen Parameters.

Typischerweise wird der Pulsabstand in den Pulsfolgen so ausgewählt, dass zu jedem Zeitpunkt höchstens einer der Pulse durch die optische Faser propagiert, noch typischer so, dass ein neuer Puls erst dann in die die optische Faser eingekoppelt wird, wenn der von den Rayleighstreuern rückgestreute Signalanteil des vorangegangenen Pulses abgeklungen oder ausgekoppelt ist.

Es ist aber auch möglich, jeweilige Folgen von Doppelpulsen mit sich monoton ändernder optische Frequenz in die Faser einzukoppeln. Dem entsprechend können die Pulsabstände zwischen den Doppelpulsen und innerhalb der Doppelpulse so ausgewählt werden, dass zu jedem Zeitpunkt höchstens zwei der Pulse (unterschiedliche optische Frequenz) durch die optische Faser propagieren. Typischerweise ist ein Pulsabstand zwischen den Pulsen eines Doppelpulses geringer als ein Pulsabstand zwischen aufeinanderfolgenden Doppelpulsen. Dabei wird typischerweise der Pulsabstand innerhalb eines Doppelpulses so gewählt, dass die beiden Pulse in der optischen Faser miteinander interferieren können.

Außerdem ist es möglich, mehrere Pulse mit unterschiedlicher optischer Frequenz gleichzeitig in die Faser einzukoppeln. Durch spektrale Trennung (mittels mehrerer Empfänger) oder spektrale Trennung nach der Detektion im Basisband kann dadurch die Messwiederholrate weiter erhöht werden.

Gemäß einer Ausführungsform umfasst eine Vorrichtung zum vorzeichenrichtigen Bestimmen einer Änderung eines Parameters eine optische Faser, die zumindest in einem Abschnitt Rayleighstreuer aufweist, einen mit der optischen Faser gekoppelten Dauerstrichlaser zum Erzeugen eines zumindest im Wesentlichen kohärenten Lasersignals,

einen zwischen dem Dauerstrichlaser und der optischen Faser angeordneten Modulator zum Umwandeln des Lasersignals in optische Pulse, einen Signalgenerator aufweisend einen mit einem Steuereingang des Modulators verbundenen ersten Signalausgang zum Ausgeben von Pulssignalen für das Umwandeln des Lasersignals in optische Pulse, und einen mit dem Dauerstrichlaser verbundenen zweiten Signalausgang zum Ausgeben eines sich abschnittsweise typischerweise streng monoton ändernden Steuersignals für einen Speisestrom des Dauerstrichlasers und/oder eine Temperiereinheit des Dauerstrichlasers, und eine mit der optischen Faser gekoppelte Detektionseinheit zum Messen von jeweiligen Rayleighrückstreuleistungen für die sich in der optischen Faser ausbreitenden optischen Pulse.

Optional kann eine Direktmodulation des Dauerstrichlasers vorgesehen sein, d.h. sowohl zur Erzeugung der optischen Pulse als auch für die Laserfrequenzmodulation der optischen Pulse. Die optischen Frequenzen der Pulse müssen dabei auch nicht unbedingt streng monoton steigen oder fallen. Dies kann zwar zu einer Verringerung der Reproduzierbarkeit der Messungen führen, ermöglicht aber einen kostengünstigeren Aufbau.

Typischerweise beträgt eine Kohärenzlänge des Lasersignals und/oder der optischen Pulse in der optischen Faser zumindest 10 m.

Bei dem Dauerstrichlaser handelt es sich typischerweise um eine Laserdiode. Die Verwendung eines konventionellen, vergleichbaren teuren, durchstimmbaren Lasers ist nicht erforderlich.

Die Pulssignale können Rechteckpulse oder Gaußpulse sein.

Außerdem kann das Steuersignal ein abschnittsweise lineares Signal, insbesondere ein abschnittsweise linear ansteigendes und abschnittsweise linear fallendes Signal und/oder ein oszillierendes Signal sein.

Beispielsweise kann das Steuersignal ein Sägezahnsignal, ein Dreiecksignal, insbesondere ein symmetrisches Sägezahnsignal oder ein unsymmetrisches Dreiecksignal, oder ein Sinussignal, aber auch ein entsprechend einer Kalibrierungskurve korrigiertes entsprechendes Signal sein.

Typischerweise sind die Pulssignale zeitlich mit dem Steuersignal korreliert.

Typischerweise umfasst die Vorrichtung eine Steuer- und Auswerteeinheit, die mit dem Signalgenerator und der Detektionseinheit verbunden ist.

Die Detektionseinheit kann einen optischen Vorverstärker, einen optischen Filter, und eine Fotodiode aufweisen. Wenn die Fotodiode eine Avalanche-Fotodiode ist, kann auf den Vorverstärker auch verzichtet werden.

Typischerweise weist die Detektionseinheit weiterhin einen mit der Steuer- und Auswerteeinheit und einem Triggersignalausgang des Signalgenerators verbundenen Analog-Digital-Wandler auf.

Außerdem ist die Vorrichtung typischerweise eingerichtet, die hierin beschriebenen Verfahren auszuführen.

Insbesondere kann die Vorrichtung eingerichtet sein, die jeweiligen Rayleighrückstreuleistungen (Rayleighrückstreuleistungsspektren) in der optischen Faser ortsaufgelöst zu bestimmen.

Der Rayleighstreuer aufweisende Abschnitt bzw. die optische Faser können eine Länge von zumindest 10 m, 1000 m oder sogar 50000 m haben.

Die optische Faser (insbesondere der Rayleighstreuer aufweisende Abschnitt) kann teilweise in ein zu überwachendes Objekt, insbesondere ein Bauwerk, eingebettet sein und/oder an dem Objekt befestigt sein.

Weitere vorteilhafte Ausgestaltungen, Einzelheiten, Aspekte und Merkmale der vorliegenden Erfindung ergeben sich aus den Unteransprüchen, der Beschreibung sowie den beigefügten Zeichnungen. Darin zeigt:

Fig. 1 eine schematische Darstellung einer Vorrichtung zum vorzeichenrichtigen Bestimmen einer Änderung eines Parameters gemäß einem Ausführungsbeispiel;

Fig. 2 Steuersignale für die in Figur 1 dargestellte Vorrichtung und resultierende Pulsfolgen in der optischen Faser der Vorrichtung gemäß einem Ausführungsbeispiel;

Fig. 3A Leistungsspektren für eine Position in einer optischen Faser als Funktion der Zeit gemäß einem Ausführungsbeispiel;

Fig. 3B ein erstes Leistungsspektrum und ein zweites Leistungsspektrum für einen festen Zeitpunkt;

Fig. 4 ein Blockdiagramm eines Verfahrens zum vorzeichenrichtigen Bestimmen einer Änderung eines physikalischen Parameters gemäß einem Ausführungsbeispiel;

Fig. 5 in einer optischen Faser gemessene Dehnungsamplituden;

Fig. 6A eine interferometrisch bestimmte Kalibrierungskurve einer Laserdiode gemäß einem Ausgangsbeispiel

Fig. 6B ein mittels der in Figur 6A gezeigten Kalibrierungskurve korrigierten Leistungsspektrums gemäß einem Ausgangsbeispiel;

Fig. 7A gemessene Leistungsspektren für eine Position in der optischen Faser als Funktion der Zeit gemäß einem Ausführungsbeispiel;

Fig. 7B ein sich während der Messung erweitern des Referenzleistungsspektren für die Position in der optischen Faser als Funktion der Zeit gemäß einem Ausführungsbeispiel; und

Fig. 7C eine mittels Korrelationsanalyse bestimmte Dehnungen an einer Position in der optischen Faser als Funktion der Zeit gemäß einem Ausführungsbeispiel.

In der folgenden ausführlichen Beschreibung wird auf die beiliegenden Zeichnungen Bezug genommen, in denen als Veranschaulichung spezifische Ausführungsformen gezeigt sind, in denen die Erfindung praktiziert werden kann.

Zum besseren Verständnis werden theoretische Betrachtungen vorangestellt.

Die Ursache der Rayleigh-Streuung in Glasfasern liegt in einer Vielzahl von Brechungsindexvariationen im Subwellenlängengrößenbereich (Rayleighstreuern, die folgenden auch kurz als Steuer bezeichnet werden), die während des Herstellungsprozesses im Faserkern eingefroren wurden. Die rückgestreute Leistung einer Singlemode-Faser (SMF) kann durch ein eindimensionales Speckle-Modell als eine Gruppe von N diskreten Rayleighstreuern beschrieben werden, die eine gleichmäßige statistische Positionsverteilung entlang der Faserdistanzachse z aufweisen. Die individuellen Reflexionen der Rayleighstreuer, bezogen auf die einfallende optische Leistung, können auch durch eine statistisch unabhängige Gleichverteilung modelliert werden.

Die optische Faser kann periodisch durch eine Reihe von rechteckigen optischen Pulsen mit der Spitzenleistung $I_0$ und der Pulsdauer $\tau_d$ abgefragt werden. Die Impulse werden als monochromatisch und linear polarisiert angenommen und treten periodisch zum Zeitpunkt $t_z = 0$ in die Faser ein. Zusätzlich zu dieser Pulsausbreitungszeitachse $t_z$ (die einer Distanzachse in der optischen Faser entspricht) wird eine zweite Zeitachse t eingeführt, um die Änderungen der rückgestreuten Leistung als Funktion der fortschreitende Messzeit (von Pulsfolge zu Pulsfolge) zu beschreiben. Die von einem Photodetektor erfasste optische Leistung $I(t,t_z)$ aus vorwärts austretenden optischen Impulsen entspricht den zeitgemittelten und quadratischen Absolutwerten der Summe der diskreten rückgestreuten optischen Feldkomponenten. Die gesamte detektierte Leistung $I(t,t_z)$ setzt sich zusammen aus einer direkten Summenleistungskomponente $I_d(t_z)$ und einer kohärenten Leistungskomponente $I_{coh}(t,t_z)$:

$$I\left(t,t_z\right) = \left| \sum_{i=1}^{N} \sqrt{r_i}\, \hat{E}_0 \mathrm{e}^{j 2\pi v_0 \left(t_z - \tau_i(t)\right)} \mathrm{rect}\left( \frac{t_z - \tau_i(t)}{\tau_d} \right) \right|^2$$

$$= I_d\left(t_z\right) + I_{coh}\left(t,t_z\right) = \sum_{i=1}^{N} r_i I_0 \mathrm{rect}\left( \frac{t_z - \tau_i}{\tau_d} \right) + I_{coh}\left(t,t_z\right) \qquad (1)$$

Dabei beschreibt $\hat{E}_0$ die Amplitude und $v_0$ die Frequenz des optischen Feldes. Die Rücklaufzeitverzögerung des Rückstreusignals des i-ten Streuers wird durch $\tau_i = 2 n_g z_i / c_0$ beschrieben, wobei $z_i$ die Positionen der Streuer entlang der Faser, $c_0$ die Vakuumgeschwindigkeit des Lichts und $n_g$ der effektive Gruppenbrechungsindex der optischen Faser sind. Die rechteckige Impulsausbreitung wird mit der Rechteckfunktion:

rect$\{[t_z - \tau_i(t)]/\tau_d\} = 1$ for $0 \le \{[t_z - \tau_i(t)/\tau_d \le 1$, ansonsten 0

beschrieben. Zur detektierten Leistung tragen nur Streuer innerhalb des Faserabschnittes bei, die innerhalb der halben Breite w des Ausbreitungsimpulses in der Faser liegen ($w/2 = c_0 \tau_d/(2n_g)$). Dadurch wird auch die räumliche Zweipunkt-Auflösung definiert. Sie entspricht für $\tau_d = 10$ ns einer Ortsauflösung von etwa 1 m.

Während die Leistungskomponente $I_d(t_z)$ in guter Näherung unabhängig von relativen Streuverschiebungen über die fortschreitende Zeit t ist, reagiert die kohärente Leistungskomponente $I_{coh}(t,t_z)$ empfindlich auf zeitliche Verzögerungsänderungen zwischen den Streuern, z.B. durch lokale Dehnungen oder Temperaturschwankungen. $I_{coh}(t,t_z)$ kann durch folgende Doppelsummierung der Phasenverhältnisse aller Streuer beschrieben werden:

$$I_{coh}(t,t_z) = \sum_{i=2}^{N}\sum_{e=1}^{i-1} 2\sqrt{r_i r_e}\, I_0 \cos\left[2\pi v_0 \tau_{ie}(t)\right] \text{rect}\left[\frac{t_z - \tau_i(t)}{\tau_d}\right] \text{rect}\left[\frac{t_z - \tau_e(t)}{\tau_d}\right] \qquad (2)$$

Dabei beschreibt $\tau_{ie} = \tau_i - \tau_e = 2n_g z_{ie}/c_0$ die relative Verzögerung der Steuer und $z_{ie} = z_i - z_e$ den Abstand zwischen den individuellen Streuern.

Für die folgenden Betrachtungen wird der Ausbreitungsverlust entlang der Faser vernachlässigt und die Polarisationserhaltung innerhalb von w/2 angenommen. Der Phasenterm $\cos[2\pi v_0\tau_{ie}(t)]$ in Gleichung 2 bestimmt die lokalen interferometrischen Leistungsvariationen. Jede physikalische Veränderung entlang der optischen Faser kann Auswirkungen auf die zeitlichen Verzögerungen haben. Dies ist typischerweise auf Dehnungs- oder Temperaturschwankungen in der optischen Faser zurückzuführen.

Temperatur änderungen $\Delta T$ und Dehnungsänderungen $\Delta\varepsilon = \Delta z_{ie} / z_{ie}$ sind die gebräuchlichsten Messgrößen, die zudem in guter Näherung einen linearen Einfluss auf die zeitliche Streuverzögerungen $\Delta\tau_{ie}$ haben. Die relative zeitliche Streuverzögerung $\Delta\tau_{ie} / \tau_{ie}$ ist proportional zur relativen Frequenzänderung $\Delta v_p/v_0$ der optischen Pulse. Für Silikatglasfasern mit einem Dehnungskoeffizient $K_\varepsilon \approx -0{,}78$ und einen Temperaturkoeffizient $K_T \approx -6.92{\times}10^{-6}$ sich ergeben folgende Relationen:

$$\frac{\Delta v_p}{v_0} = -\frac{\Delta\tau_{ie}}{\tau_{ie}} = -\left(1 - p_e\right)\Delta\varepsilon = K_\varepsilon \Delta\varepsilon \approx -0.78\,\Delta\varepsilon$$

$$\frac{\Delta v_p}{v_0} = -\frac{\Delta\tau_{ie}}{\tau_{ie}} = -\left(\xi + \alpha\right)\Delta T = K_T \Delta T \approx -6.92{\times}10^{-6}\Delta T \qquad (3)$$

Dabei beschreibt $p_e \approx 0{,}22$ den effektiven Dehnungsoptikkoeffizienten von Siliziumdioxid, $\xi$ den thermooptischen Koeffizienten von Siliziumdioxid und $\alpha$ den thermischen Ausdehnungskoeffizienten der optischen Faser.

Für realistische Anwendungsszenarien gilt in guter Näherung $|\Delta\tau_{ie}/\tau_{ie}| \ll 1$ und $|\Delta v_p/v_0| \ll 1$.

Damit ergibt sich:

$$\tau_{ie} - \Delta\tau_{ie}(t) = \tau_{ie}\left[1 + K_\varepsilon \Delta\varepsilon(t,t_z) + K_T \Delta T(t,t_z)\right] \qquad (4)$$

Durch Ersetzen von Verzögerungen in Gleichung 4 durch entsprechende Frequenzänderungen ergibt sich nach weiteren Umformungen die detektierte gestreute Gesamtleistung schließlich zu:

$$I(t,t_z,\Delta v_p) = I_d(t_z) + \sum_{i=2}^{N}\sum_{e=1}^{i-1} 2\sqrt{r_i r_e}\, I_0 \cos\left\{2\pi\left(v_0 + \Delta v_p\right)\tau_{ie}\left[1 + K_\varepsilon \Delta\varepsilon(t,t_z) + K_T \Delta T(t,t_z)\right]\right\}$$

$$\times \text{rect}\left[\frac{t_z - \tau_i(t)}{\tau_d}\right]\text{rect}\left[\frac{t_z - \tau_e(t)}{\tau_d}\right]$$

$$(5)$$

Gleichung (5) zeigt, dass die optischen Frequenzänderungen $\Delta v_p$ und die Dehnung-/Temperaturänderungen $\Delta\varepsilon$ bzw. $\Delta T$ austauschbare Faktoren im Phasenterm sind. Temperatur- und Dehnungsänderungen können somit durch äquivalente pulsoptische Frequenzänderungen $\Delta v_p$ kompensiert werden. Unter der Bedingung, dass $\Delta T$ und $\Delta\varepsilon$ innerhalb w/2 gleich sind, ist die Kompensation vollständig. Anders ausgedrückt, über die Messung der optischen Frequenzänderungen $\Delta v_p$ können dann Dehnung-/Temperaturänderungen $\Delta\varepsilon$ bzw. $\Delta T$ in der optischen Faser bestimmt werden.

Die absoluten Positionsänderungen der Streuer $\tau_i(t)$ und $\tau_e(t)$ kann für die meisten Anwendungen vernachlässigt werden. Sie können sich gegebenenfalls aber negativ auf die Korrelationsqualität auswirken, wenn sie gegenüber den Pulspositionen stark verschoben sind.

Zum Bestimmen der Dehnung-/Temperaturänderungen $\Delta\varepsilon$ bzw. $\Delta T$ können von den Rayleighstreuern rückgestreute Leistungen (Signalanteile) über einen Bereich von diskreten optischen Pulsfrequenzwerten gemessen und die Verschiebung mittels Korrelationsanalyse entlang der optischen Frequenzachse (Wellenlängenachse) bestimmt werden.

Die Korrelationsanalyse kann alternativ, typischerweise ergänzend auch entlang der optischen Zeitachse für jeweils mindestens zwei optische Frequenzen (Wellenlängen) mit bekanntem Frequenzunterschied vorgenommen werden. Der mittels Korrelationsanalyse ermittelte Versatz der durch $\Delta\varepsilon$ bzw. $\Delta T$ hervorgerufenen Änderungen der rückgestreuten Leistungen ist proportional zu der Dehnungs- bzw. Temperaturänderungen entlang der Zeitachse. Die kumulative Summe von abschnittsweise über Zeitabschnitte berechneten Verschiebungen eines Korrelationsextremums (Maximum z.B. für Kreuzkorrelation oder Pearson-Korrelationskoeffizient bzw. Minimum für eine Methode des kleinsten quadratischen Abstandes) entspricht einem relativen Dehnungs- bzw. Temperaturänderungswert zur Zeit des Korrelationsabschnittes und erlaubt ebenfalls die Bestimmung des Vorzeichens der Änderung. Eine Verbesserung der Genauigkeit wird durch eine Interpolation des Korrelationsergebnisses erreicht. Durch Verwenden mehrerer optischer Frequenzen (Wellenlängen) für die Korrelationsanalyse entlang der Zeitachse mit bekanntem Frequenzunterschied kann über Mittelungen die Genauigkeit beim Bestimmen der Änderung des physikalischen Parameters erhöht werden.

Typischerweise kann die Änderung des physikalischen Parameters genauer bestimmt werden, wenn die Ergebnisse der Korrelationsanalyse entlang der optischen Frequenzachse und die Ergebnisse der Korrelationsanalyse entlang der optischen Zeitachse berücksichtigt werden. Dadurch erhöht sich allerdings der Aufwand. Insbesondere dann, wenn die Auswertung der eigentlichen Messung nach gelagert ist, ist der erhöhte numerische Aufwand häufig jedoch von untergeordneter Bedeutung.

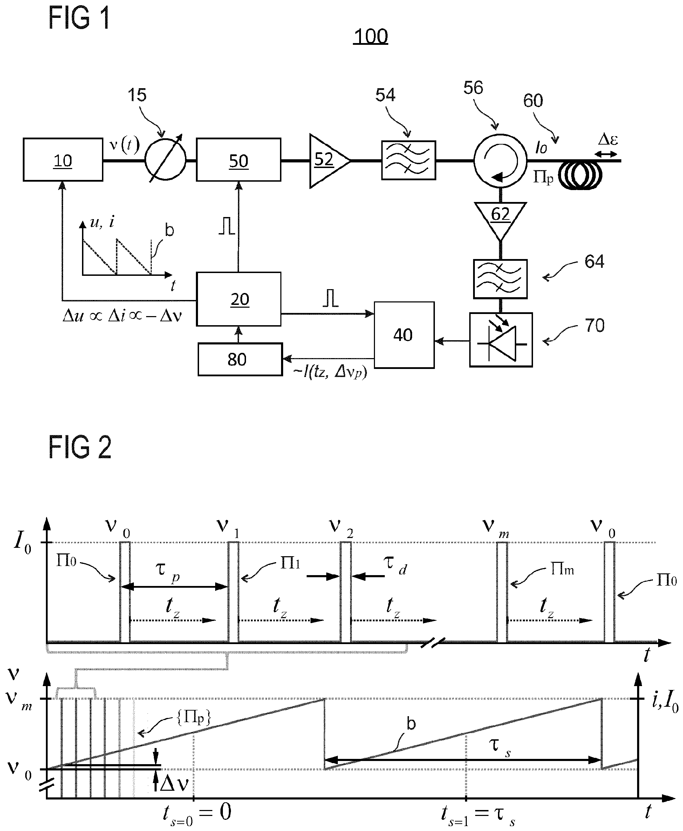

Der hierin beschriebene Ansatz zielt auf eine dynamische Messung bei erhöhter Dehnungsauflösung unter Verwendung einer möglichst einfachen und robusten Hardware-Implementierung ab, wie sie exemplarisch in Figur 1 dargestellt wird, die sowohl eine Korrelationsanalyse entlang der optischen Frequenzachse als auch eine Korrelationsanalyse entlang der optischen Zeitachse $t_z$ erlaubt.

In dem exemplarischen Ausführungsbeispiel werden bei aufeinanderfolgenden Rückstreumessungen identische Pulsfolgen mit der Pulswiederholperiode $\tau_p$ (Pulsfolgefrequenz $f_p = 1/\tau_p$) verwendet, wobei die optische Frequenz $\nu_p$ in jeder Periode/Pulsfolge linear ansteigt.

Zudem kann der Frequenzgang des Dauerstrichlasers 10 der exemplarischen Vorrichtung 100 durch eine einfache direkte Modulation des Laserstroms vorgenommen werden.

Dies wird mit Bezug zu den Figuren 1 und 2 für ein Sägezahnsignal b zur periodischen Modulation des Laststroms i erläutert, was in dem exemplarischen Ausführungsbeispiel nach Modulation des Lasersignals in einem Modulator 50, anschließender Verstärkung in einem Verstärker 52 und Wellenlängefilterung mittels eines Bandpassfilters 54 zu einem periodischen Einkoppeln identischer Pulsfolgen $\{\Pi_0, \Pi_1,...\Pi_m\}$ führt, nämlich jeweils einer Pulsfolge innerhalb der jeweiligen Pulsfolgendauer (im Folgenden auch als Periode der Pulsfolge bezeichnet) $\tau_s$, wobei die optische Frequenz $\nu_p$ (inverse Wellenlänge) der Pulse $\Pi_p$ innerhalb einer Pulsfolge $\{\Pi_p\}$ streng monoton ansteigt. Aus Gründen der Übersichtlichkeit sind in Figur 2 nur zwei aufeinanderfolgende Pulsfolgen (teilweise) dargestellt.

In dem exemplarischen Ausführungsbeispiel bestimmen sich die optischen Frequenzen $\nu_p$ der Pulse $\Pi_p$ durch $\nu_p = \nu_0 + \Delta\nu_p$. Dabei läuft der Index $p$ der Pulsfolge jeweils von 0 bis $m$ ($p = 0,1,2...m$). Die Frequenzänderung $\Delta\nu_p$ ($\Delta\nu_p = p\Delta\nu$) beschreibt den Frequenzunterschied zwischen den Pulsen $\Pi_p$ und $\Pi_0$, und $\Delta\nu$ den identischen Frequenzunterschied zwischen unmittelbar aufeinanderfolgenden Pulsen $\Pi_p$, $\Pi_{p+1}$. Da sich die optische Frequenz $\nu_p$ des Pulses $\Pi_p$ einfach aus dem Pulsindex $p$ und dem Frequenzunterschied $\Delta\nu$ ergibt, wird im Folgenden anstelle der sehr große Werte annehmenden optischen Frequenz $\nu_p$ häufig die optische Frequenzänderung $\Delta\nu_p$ zur optischen Frequenz des ersten Pulses $\Pi_0$ angegeben.

Während der Periode $\tau_s$, die in dem exemplarischen Ausführungsbeispiel einem ganzzahligen Vielfachen des Pulsabstandes $\tau_p$ zwischen aufeinanderfolgenden (benachbarten) Pulsen entspricht, werden die jeweiligen Rayleighrückstreuleistungen $I(t_s,t_z)$ zur Zeit $t=t_s$ der m+1 Pulse $\Pi_p$ gemessen. Die effektive Messwiederholrate beträgt $f_s = 1/\tau_s$.

Die korrespondierenden Dehnungs- bzw. Temperaturänderungswerte $\Delta\varepsilon(t,t_z)$, $\Delta T(t,t_z)$) der optischen Faser 60 können durch eine Korrelationsanalyse von $I(t_s,t_z,\Delta\nu_p)$ entlang der $\Delta\nu_p$-Frequenzachse für jede Faserposition $z = t_z c_0/(2n_g)$ ermittelt werden. Die Korrelation wird typischerweise für die effektiven Messzeiten (Samplingzeiten $t_s$) $t = t_s = n\tau_s$ und relativ zu einer Referenzmesszeit $t = t_{ref}$ durchgeführt, zum Beispiel durch die in Figur 1 dargestellte Steuer- und Auswerteeinheit 80.

Das in Fig. 1 dargestellte exemplarische Dehnungsmesssystem 100 verwendet einen mit einer Standard-Silikat-Monomodefaser 60 optisch gekoppelten durchstimmbaren Dauerstrichlaser 10, der als vergleichsweise kostengünstige, im cw-Modus (von engl. "continuous wave") betreibbare Laserdiode 10 mit einer exemplarischen spektralen Breite von 1,3 MHz und einer mittleren Wellenlänge von 1549,89 nm ($\nu_0 \approx$ 193.36 THz) ausgeführt sein kann. Die Kohärenzlänge in der mit der Laserdiode 10 gekoppelten Faser 60 liegt dann in der Größenordnung von 50 m. Der Grad des Kohärenzverlustes innerhalb der Pulslänge kann daher bei typischen Pulsbreiten von wenigen Metern vernachlässigt werden.

Als Signalgenerator kann ein (120 MHz) Mehrkanal-Signalgenerator, der das synchronisierte Sägezahnsignal u(t) (Kurve b) für die Frequenzmodulation der Laserdiode 10 (Laserfrequenzmodulation), das Rechtecksignal für die Pulsformung im mit der Laserdiode gekoppelten Modulator 50, sowie das Trigger- bzw. Synchronisationssignal für einen Analog-digital-Wandler 40 zur Datenerfassung liefert, verwendet werden.

Die optischen Impulse $\Pi_p$ werden in dem exemplarischen Ausführungsbeispiel von einem optischen Halbleiterverstärker als Modulator 50 erzeugt, der über einen nicht dargestellten Treiber als schneller optischer Schalter mit einem hohen nominalen Extinktionsverhältnis von 70 dB betrieben werden kann.

Dabei kann vorgesehen sein, die Eingangsleistung der optischen Halbleiterverstärker 50 über einen polarisationserhaltenden variablen optischen Abschwächer 15 einzustellen. Das optische Pulssignal kann anschließend durch einen Verstärker 52 verstärkt werden, zum Beispiel mittels eines erbiumdotierten Faserverstärker (EDFA) im Konstantstrombetrieb auf bis zu mehrere hundert mW Spitzenleistung verstärkt werden.

Spontanes Emissionsrauschen kann durch ein kostengünstiges DWDM-Filter 54 (von engl. dense wavelength division multiplexer filter) mit einer exemplarischen Bandbreite von 0,2 nm herausgefiltert werden, bevor das Pulssignal über einen polarisationsunempfindlichen optischen Zirkulator 56 in die Standard Monomodefaser (Singlemodefaser) 60 eingekoppelt werden kann.

Die gesamte in der Faser 60 rückgestreute Leistung kann von einem Vorverstärker 62, typischerweise einem weiteren im Konstantstrommodus betriebenen EDFA verstärkt und anschließend von einem zweiten DWDM-Filter 64 rauschgefiltert werden.

In dem exemplarischen Ausführungsbeispiel wird das vorverstärkte und gefilterte optische Rückstreusignal durch einen Fotodetektor 70, beispielsweise einen PIN-Fotodetektor mit einer Bandbreite von 120 MHz und eine integrierte Transimpedanz-Verstärkung in elektrische Signale umgewandelt.

Die elektrischen Signale können durch einen vom Signalgenerator 20 getriggerten Analog-Digital-Wandler (ADC) 40, zum Beispiel einen ADC mit einer exemplarischen Auflösung von 14 Bit und einer exemplarischen Abtastrate von 500 MS/s (500 $10^6$ pro Sekunde) abgetastet und digitalisiert werden.

Die gewählte Abtastzeit von 500 MS/s entspricht einer räumlichen Abtastrate in der Faser 60 von ca. 20,4 cm. Das bedeutet, dass bei räumlichen Auflösungen im Meterbereich die benachbarten Rückstreupunkte eine erhebliche Überlappung der axialen Dehnungsverteilung sowie des Rayleigh-Streuerbeitrags aufweisen können.

Die vom ADC digitalisierten Intensitätswerte I können als Messwerte an die Steuer- und Auswerteeinheit 80 übermittelt werden, die ihrerseits typischerweise den Signalgenerator 20 steuern kann.

Als Steuer- und Auswerteeinheit 80 kann typischerweise ein Computer, beispielsweise einen PC dienen, der auch den ADC 40 bereitstellen kann.

Ein erreichbare Genauigkeit von Langzeit- und quasistatische Dehnungs- oder Temperaturmessung wird wesentlich durch die Frequenzstabilität der Laserquelle bestimmt. Für das Dehnungsmesssystem 100 ergibt sich eine maximale Dehnung und Temperaturabweichung über 24 Stunden von $\Delta\varepsilon \approx \pm 120\ n\varepsilon$ (Nano $\varepsilon$) bzw. $\Delta T \approx \pm 13,4$ mK. Dehnungseinheiten werden in der vorliegenden Schrift in $\varepsilon$ angegeben, wobei gemäß üblicher Definition der Dehnungsmessung gilt: $1\ \varepsilon \overset{\wedge}{=} 1$ m/m.

Die Verwendung eines unsymmetrischen (Sägezahn-) Strommodulationssignal für die Laserdiode 10 ermöglicht eine Phasenerkennung der Strommodulation aus Diskontinuitäten des Rückstreusignals.

Damit können ein zweiter Datenerfassungskanal und die entsprechende Auswertung für die Wiederherstellung der Phase entfallen. Somit kann die Vorrichtung 100 besonders einfach aufgebaut und betrieben werden.

Die maximale Pulswiederholrate $f_{p,max}$ wird durch die Faserlänge $z_{max}$ gemäß $f_{p,max} = c_0/(2n_g z_{max})$ begrenzt.

Die maximale Messwiederholrate für den genutzten Frequenz-Scanning-Modus wird jedoch durch die Anzahl der Frequenzschritte in einer Pulsfolge auf $f_s$ reduziert. Wiederholraten im Frequenz-Scanning-Modus können bei Faserlängen von bis zu wenigen Kilometern im kHz-Bereich liegen, was für die Schwingungsanalyse von ausgedehnten Strukturen und allgemeine Anwendungen zur Strukturüberwachung aber mehr als ausreichend ist. Der Frequenzbereich deckt auch die erforderliche Bandbreite für die seismische Messung von etwa 5-150 Hz ab.

Der Messmodus der exemplarischen Vorrichtung 100 kann auch auf eine differentielle Leistungsänderungsanalyse bei einer optischen Frequenz mit faserlängenbegrenzten Wiederholraten bis zu fs = 7 MHz umgestellt werden.

Außerdem können mit der Vorrichtung 100 Bestimmungen von Leistungsspektren für typischerweise höhere Dehnungsraten bei geringerer Dehnungsauflösung und niedrigerer Wiederholrate durchgeführt werden, und entsprechend einer Korrelationsanalyse entlang der Zeitachse ausgewertet werden.

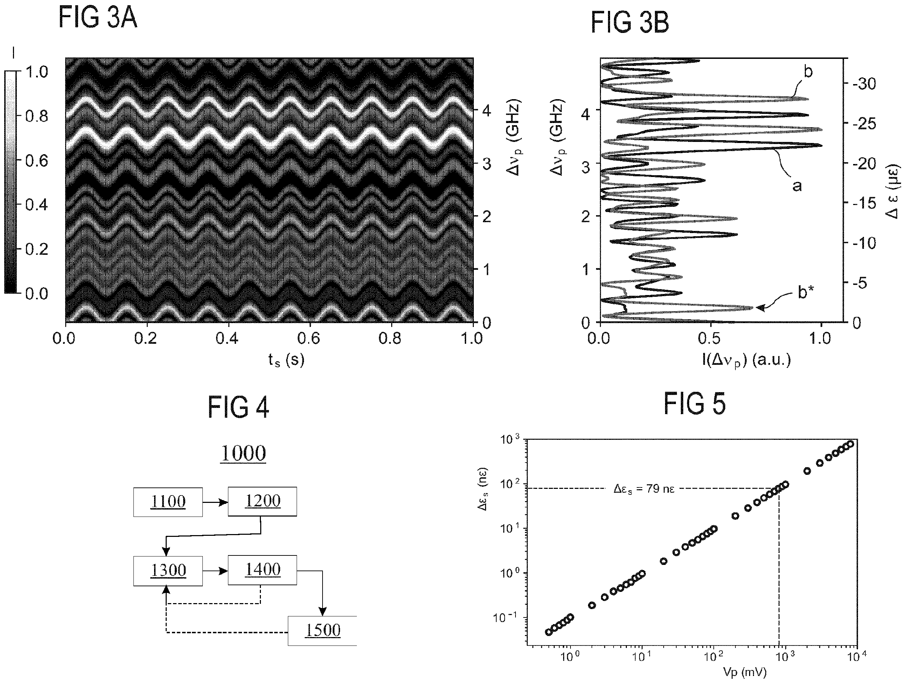

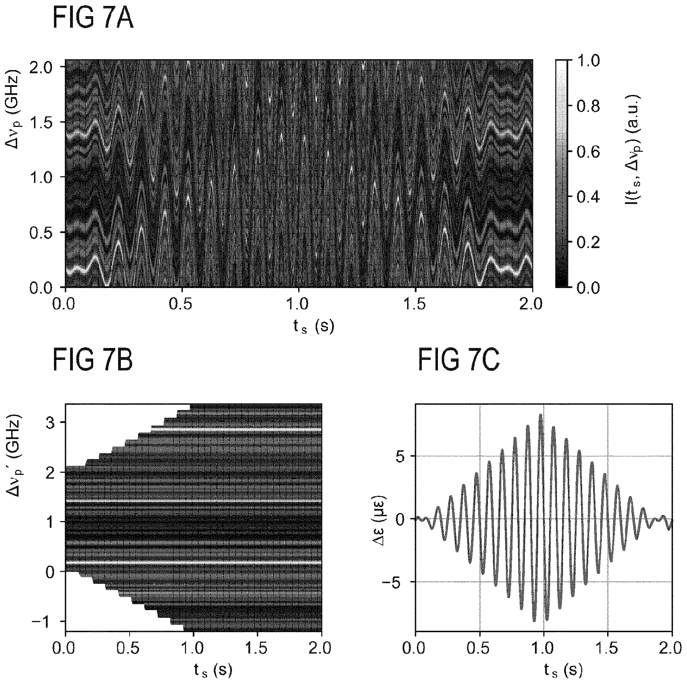

Mit dem Dehnungsmesssystem 100 über eine Korrelationsanalyse entlang der optischen Frequenzachse erhaltene Ergebnisse werden unten mit Bezug zu den Figuren 5 und 7A bis 7C erläutert.

Zunächst wird in Fig. 3A jedoch ein simulierter zeitlicher Verlauf von Rayleighrückstreuleistungsspektren I für eine Position in einer optischen Faser als Funktion der Zeit (zu diskreten Zeitpunkt $t_s$) illustriert. Dabei werden die simulierte Rayleighrückstreuleistung von Pulsfolgen mit $f_s$ = 1 kHz und $f_p$ = 200 kHz während einer sinusförmigen Dehnung mit 1 $\mu\varepsilon$ Spitzenamplitude einer optischen Faser mit 1000 zufällig verteilten Streuern farb- bzw. grauwertkodiert (von schwarz (Minimum) bis weiß (Maximum)) für Frequenzänderungen $\Delta\nu_p = \nu_p - \nu_0$ im Bereich von 0 bis 5 GHz dargestellt. Fig. 3B zeigt Leistungsspektren für die Zeitpunkte $t_s$=0 (Kurve a, ersten Leistungsspektrum, Referenzspektrum) bzw. $t_s$=0 (Kurve b, zweites Leistungsspektrum).

In Figur 3B sind zum einen zueinander frequenzverschobene, korrelierende Peaks gut zu erkennen.

Zum anderen gibt es im zweiten Leistungsspektrum einen Peak b*, der im ersten Leistungsspektrum keine bzw. nur eine teilweise Entsprechung hat. Daher kann es günstig sein, das Referenzspektrum bei einer fortlaufenden Messung um während der Messung neu hinzukommende Spektrenabschnitte zu ergänzen. Dies wird unten mit Bezug zu den Figuren 7A bis 7C detaillierter erläutert.

Aus den in Figur 3A bzw. Figur 3B dargestellten Leistungsspektren bzw. entsprechenden gemessenen Spektrem lassen sich die Änderungen der Dehnung in der optischen Faser vorzeichenrichtig mit dem im Folgenden mit Bezug zur Figur 4 erläuterten Verfahren 1000 sehr genau rekonstruieren.

In einem Schritt 1100 wird zu einem ersten Zeitpunkt $t_{ref}$ eine erste Pulsfolge von nacheinander durch eine Rayleighstreuer aufweisende optische Faser propagierenden, (zumindest im Wesentlichen) kohärenten optischen Pulsen $\Pi_p$ gleicher Pulsdauer $\tau_d$ und sich streng monoton ändernder optische Frequenz $v_p$ erzeugt.

In einem Schritt 1200 wird für den ersten Zeitpunkt $t_{ref}$ ein erstes Leistungsspektrum $I(t_{ref}, t_z, \Delta v_p)$ bestimmt. Dabei wird eine jeweilige Leistung ($I(t_{ref}, t_z)$) eines von den Rayleighstreuern rückgestreuten Signalanteils für jeden der optischen Pulse ($\Pi_p$) der ersten Pulsfolge gemessen und der jeweiligen Pulsfrequenz $v_p$ bzw. Pulsfrequenzänderung $\Delta v_p$ zugeordnet.

In einem Schritt 1300, der auch vor dem Schritt 1200 erfolgen kann, werden zu einem zweiten Zeitpunkt $t_s >$ $t_{ref}$ nacheinander durch die optische Faser propagierende, (zumindest im Wesentlichen) kohärente optische Pulse $\Pi_p$ gleicher Pulsdauer $\tau_d$ und sich streng monoton ändernder optische Frequenz $v_p$ einer zweiten Pulsfolge erzeugt. Die zweite Pulsfolge entspricht typischerweise zumindest im Wesentlichen der ersten Pulsfolge oder einer Permutation der ersten Pulsfolge.

In einem Schritt 1400 wird für den zweiten Zeitpunkt $t_s$ ein zweites Leistungsspektrum ($I(t_s, t_z, \Delta v_p)$) bestimmt. Dabei wird eine jeweilige Leistung ($I(t_s, t_z)$) eines von den Rayleighstreuern rückgestreuten Signalanteils für jeden der optischen Pulse ($\Pi_p$) der zweiten Pulsfolge gemessen und der jeweiligen Pulsfrequenz $v_p$ bzw. Pulsfrequenzänderung $\Delta v_p$ zugeordnet.

Schließlich erfolgt in einem Schritt 1500 ein vorzeichenrichtiges Bestimmen einer Änderung einer Dehnung $\Delta\varepsilon$ (oder eines anderen physikalischen Parameters) der optischen Faser. Dazu wird ein Versatz $\Delta v_m$ zwischen dem zweiten Leistungsspektrum und dem ersten Leistungsspektrum bestimmt.

Die erste Pulsfolge und die zweite Pulsfolge werden über eine jeweilige Modulation des Speisestroms eines Dauerstrichlaser und eine mit der Modulation des Speisestroms korrelierten Modulation (Verstärkung/Abschwächung) des vom Dauerstrichlaser ausgegebenen Lasersignals erzeugt.

Typischerweise wird der Speisestrom zum Erzeugen der jeweiligen Pulsfolge monoton, noch typischer streng monoton geändert.

Wie in Figur 4 durch die gestrichelten Pfeile dargestellt wird, können die Schritte 1300, 1400, 1500 des Verfahren 1000 für weitere Zeitpunkte $t_s$ mehrfach wiederholt werden. Dabei repräsentiert der untere der gestrichelten Pfeile einer Ausführungsform, bei der das vorzeichenrichtige Bestimmen nach der Messung erfolgt, und der obere der gestrichelten Pfeile repräsentiert eine online-Auswertung.

Typischerweise werden die Leistungsspektren in den Schritten 1200 und 1400 jeweils für eine Vielzahl von Positionen entlang der Faserachse (ortsaufgelöst) bestimmt.

Wie bereits oben erläutert wurde, kann das vorzeichenrichtige Bestimmen der Änderung mittels einer Korrelationsanalyse des ersten Leistungsspektrums $I(t_{ref}, t_z, \Delta v_p)$ und des zweiten Leistungsspektrums $I(t_s, t_z, \Delta v_p)$ entlang der Frequenzachse $\Delta v_p$ erfolgen. Dies wird im Folgenden für eine Ausführungsform einer Kleinste-Quadrate-Korrelationsanalyse zur Bestimmung der Dehnung- bzw. Temperaturänderung äquivalenten (proportionalen) Frequenzverschiebung $\Delta v_m$ noch etwas detaillierter ausgeführt.

Dabei wird die Frequenzverschiebung $\Delta v_m$ des zweiten Leistungsspektrums zum Zeitpunkt $t_s$ relativ zum ersten Leistungsspektrum zu einer Referenzzeit $t_{ref}$ als kleinstes (minimales) Argument der Korrelationsfunktion $R_{ref,s}(q)$ gemäß der folgenden Gleichungen 6, 7 bestimmt:

$$\Delta v_m\left(t_s, t_z\right) = \arg\min_q\left[R_{ref,s}\left(q\right)\right]\Delta v \tag{6}$$

$$R_{ref,s}\left(q\right) = \begin{cases} \dfrac{1}{m-q}\sum_{p=0}^{m-q}\left[I\left(t_{ref}, t_z, \Delta v_{p+q}\right) - I\left(t_s, t_z, \Delta v_p\right)\right]^2 & q \geq 0 \\ R_{s,ref}\left(-q\right) & q < 0 \end{cases} \tag{7}$$

wobei $|q| < m$.

Dieser Korrelationsalgorithmus zeigt eine verbesserte Stabilität und Leistung in Bezug auf fehlerhafte Korrelationsergebnisse und Präzision im Vergleich zur Standard-Kreuzkorrelationsanalyse.

Insbesondere zeigt der vorgeschlagene Algorithmus vergleichbare Ergebnisse wie eine Pearsons Korrelationskoeffizientenanalyse, bei erheblich reduziertem Rechenaufwand.

Außerdem zeigt sich, dass sich die Auflösung der gemessenen Frequenzverschiebung $\Delta v_m$ durch eine Interpolation der Korrelationsfunktion $R_{ref,s}(q)$ effektiv um mehr als zwei Größenordnungen über die verwendete Frequenzschrittweite $\Delta v$ beim Abtasten der optischen Faser mit den Pulsfolgen hinaus erhöhen lässt. Insbesondere durch die Verwendung eines kubischen Interpolationspolynoms $R'_{ref,s}(q')$ anstelle von $R_{ref,s}(q)$ in den Gleichungen 6, 7 kann die Frequenzverschiebung durch die Argmin-Operation (Bestimmen des Arguments für das die jeweilige Funktion eines Minimum aufweist) hoch aufgelöst berechnet werden. Typischerweise ist der Interpolationsfaktor $k_p$ ($k_p = \Delta v/\Delta v'$) größer als oder gleich 50 noch typischer größer als oder gleich 100.

Die in Figur 5 präsentierten Ergebnisse wurden mit einem exemplarischen Interpolationsfaktor von $k_p = 500$ erzielt. Figur 5 zeigt Dehnungsspitzenamplituden $\Delta \varepsilon_s$, die aus Leistungsspektren einer optischen Faser bestimmt wurden, deren Länge über die an ein Piezoelement angelegte Spannung $V_p$ variiert wurde. Der Wert für die Dehnungsspitzenamplitude $\Delta \varepsilon_s \approx 79$ nε entspricht einer äquivalenten Messfrequenzschrittweite von $\Delta v \approx 11,94$ MHz.

Die Dehnungsantwort $\Delta \varepsilon_s$ ändert sich in der doppelt-logarithmischen Beauftragung mit der Spannung $V_p$ linear über mehr als vier Größenordnungen (von 47,5 pε bis 778 nε), und über mehr als drei Größenordnungen unterhalb des $\Delta v$-Äquivalentdehnungswertes $\Delta \varepsilon_s = 79$ nε für die gewählte Einstellungen $\Delta v \tau_d \approx 0,24$. Dies bestätigt die Anwendbarkeit des Interpolationsansatzes und zeigt, dass das die hierin beschriebenen Verfahren und Vorrichtung für die quantitative, verteilte Dehnungsmessung im Bereich Piko-$\varepsilon$ eingesetzt werden können.

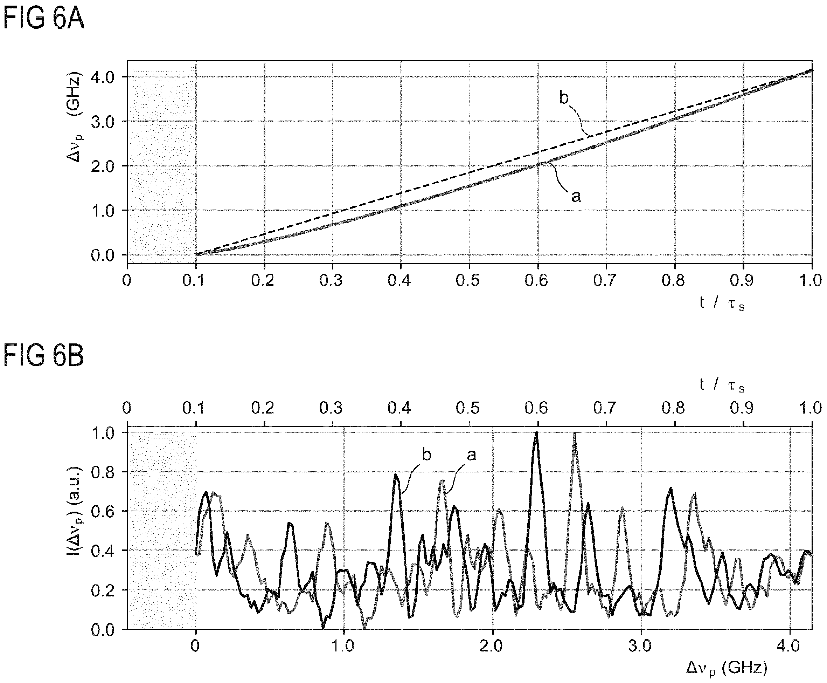

Um die Figur 5 dargestellten Ergebnisse zu erzielen, wurde zudem eine Korrektur der nicht vollkommen linearen Abhängigkeit der optischen Frequenz der verwendeten Laserdiode vom monoton steigenden oder fallenden Modulationssignal des Signalgenerators 20 vorgenommen, wie sie mit Bezug zu den Figuren 6A, 6B unten erläutert wird.

Für eine möglichst genaue Minimierung der interpolierten Korrelationsfunktion R'ref,s(q') und eine lineare Dehnungsantwort ist es typischerweise wichtig, dass die Breiten der Minima der Korrelationsfunktion $R_{ref,s}(q)$ mehrere Abtastpulse (Samples) breit (mehrere $\Delta v_m$ breit) sind. Dies impliziert, dass auch die durchschnittlichen Breiten von $I(\Delta v_p)$ mehrere Abtastpulse breit sind (vgl. dazu auch Fig. 3B).

Dies kann aber durch die Berücksichtigung physikalischer Streustatistiken sichergestellt und sogar optimiert werden. Da die mittlere Periodizität und damit auch die mittlere Breite der Rückstreupeaks von $I(\Delta v_p)$ statistisch durch die mittlere Streuverzögerung $\tau_{ie}$ innerhalb von w/2 bestimmt wird, kann ein geeigneter Wert des Frequenzschrittes $\Delta v$ für eine gegebene Pulsdauer $\tau_d$ gewählt werden, um diese Anforderung zu erfüllen. Die theoretische maximale Merkmalsperiodizität von $I(\Delta v_p)$ wird durch die maximale Streuverzögerung $\tau_{ie}$ begrenzt.

In Untersuchungen konnte ein praktikabler Wert für den Relationskoeffizienten $g = \Delta v \tau_d$ ermittelt werden, der in der Größenordnung von g $\approx$ 0,25 für Rechteckimpulse liegt. Auf diese Weise können die Wiederholrate und der Frequenzbereich für eine bestimmte Pulsdauer maximiert werden.

Fig. 6A zeigt eine Kalibrierungskurve a für die verwendete Laserdiode (einem sogenannten distributed feedback (DFB) Laser), nämlich die resultierende Frequenzänderung $\Delta v_p$ während der Laserstrommodulation (mit linear mit der Zeit t ansteigenden Speisestrom der Laserdiode), wie sie aus einer Phasenwechselanalyse in einem unsymmetrischen Mach-Zehnder-Interferometer gewonnen wurde ($f_s = 1$ kHz, $f_p = 200$ kHz, $\tau_d = 10$ ns, $\Delta v \approx 23.07$ MHz). Zum Vergleich zeigt die Kurve b den idealen linearen Verlauf.

Während die Frequenzverbreitung (Chirp) während der Pulsdauer $\tau_d$ typischerweise vernachlässigt werden kann, kann die Abweichung der linearen Beziehung zwischen dem Speisestrom der Laserdiode und der optischen Frequenzänderung (optischen Frequenz) der Laserstrahlung insbesondere für große Dehnungswerte zu signifikanten Abweichungen führen. Daher werden die gemessenen Leistungsspektren typischerweise anhand der Kalibrierungskurve korrigiert. Figur 6B zeigt in den Kurven a, b ein angemessenes Leistungsspektrum (Kurve a) und ein gemäß der Kalibrierungskurve a in Figur 6A korrigiertes Leistungsspektrum (Kurve b).

Im Ergebnis können die Dehnungsänderungen aus $\Delta v_m(t_s,t_z)$ berechnet und die interpolierten Korrelationsfunktion $R'_{ref,s}(q')$ mit den numerisch linearisierten Sweepsequenzen $I(t_s,t_z,\Delta v_p)$ als Eingangsvektoren für jede Abtastzeit $t_s$ und jede Position $t_z$ in der optischen Faser gemäß

$$\Delta \varepsilon \left( t_s, t_z \right) = \frac{\Delta v_m \left( t_s, t_z \right)}{K_\varepsilon v_0}$$

$$(8)$$

berechnet werden.

Alternativ dazu kann auch der Speisestrom für den Laser entsprechend der Kalibrierungskurve angepasst werden.

Der Vorteil des hierin beschriebenen Wellenlängen-Scanning-Ansatzes liegt in der nichtverzerrten Abhängigkeit

zwischen $I(\Delta\nu_p)$ und der Dehnung. Es treten nur Signal verschiebungen auf. Dies gewährleistet eine langzeitstabile Messung über einen größeren Dehnungsbereich durch den Vergleich mit einer hoch korrelierten Referenz.

Die nichtverzerrte $I(t_s, \Delta\nu_p)$-Verschiebung als Funktion der Dehnung hat eine weitere positive Auswirkung. Obwohl der messbare Dehnungsbereich methodisch durch die Einhüllende der Frequenzverschiebung des Laser-Sweeps $\Delta\nu_p$ begrenzt wird, kann diese Einschränkung durch die Verwendung der rückgestreuten Leistungsdaten von Dehnungsverschiebungen neuer Messergebnisse $I(t_s, \Delta\nu_p)$, die nach der Korrelation die $\Delta\nu_p$-Grenze überschreiten, aufgehoben werden. Diese neuen Daten können verwendet werden, um die Leistungsreferenzspektren $I(t_{ref}, \Delta\nu_p')$ über $\Delta\nu_p$ hinaus kontinuierlich zu erweitern, indem jeweils neue Leistungsspektrenabschnitte, die über den Bereich von $\Delta\nu_p$ hinausgehen, angehängt werden.

Ein Beispiel für eine Messung $I(t_s, \Delta\nu_p)$ während einer amplitudenmodulierten harmonischen Dehnungsanregung einer optischen Faser ist in Figur 7A dargestellt. Das sich kontinuierlich erweiternde Referenzspektrum $I(t_{ref}, \Delta\nu_p')$ gemäß dieser Messung ist in Figur 7B dargestellt. Das gemessene Dehnungsergebnis, das sich aus der Korrelationsanalyse mit $I(t_{ref}, \Delta\nu_p')$ ergibt, ist in Figur 7C dargestellt.

Die beschriebene Erweiterung des Referenzspektrums $I(t_{ref}, \Delta\nu_p')$ kann zudem die Korrelationsergebnisse durch einen größeren Korrelationsreferenzbereich verbessern. Der Dehnungsbereich bei einer kontinuierlichen Messung wird damit nur durch den physikalischen Dehnungsbereich der Faser begrenzt. Es sind keine abstimmbare Laserquelle, abstimmbare Filter oder eine externe Modulation mit hoher Bandbreite erforderlich. Die einzige Einschränkung ist dann die maximale Dehnungsrate, die immer noch teilweise überlappende Sweep-Ergebnisse für eine korrekte Korrelation sicherstellt und ein kontinuierliches Anpassen des Referenzspektrums ermöglicht.

Durch die Speicherung des erweiterten Referenzspektrums ist es zudem auch möglich, eine unterbrochene Messung wieder aufzunehmen und/oder in unregelmäßigen Abständen relative Dehnungsänderungs-Messungen durchzuführen.

Da die rückgestreute Leistungssignatur als Funktion von $\Delta\nu$ eindeutig und nicht-periodisch ist, liefert die Korrelation von wieder aufgenommenen Messungen mit $I(t_{ref}, t_z, \Delta\nu_p')$ korrekte und eindeutige Verschiebungsergebnisse.

Diese Funktionalität ist sehr nützlich für Langzeitüberwachungsanwendungen, bei denen zusätzliche Informationen zur absoluten Dehnungsänderung benötigt werden. Bekannte Phasendemodulationsverfahren sind dafür in der Regel ungeeignet.

Der mit Bezug zur Figur 1 beschriebene Aufbau wurde zudem in einer realen Strukturüberwachungsanwendung getestet. Für die statische und modale Schwingungsanalyse wurde dabei ein 24,4 m langes Stahlbetonbrückenmodell mit über die ganze Länge angeklebter optischer Faser erstellt. Die Dehnungsverteilung wurde mit einer Wiederholrate $f_s$ = 1 kHz und einer Ortsauflösung von 1 m ($\tau_d$ = 10 ns) während einer Schwingungsanregung mit weißem Rauschen (< 80 Hz) gemessen, bei der ein Schwingerreger auf der Brücke in nicht zentrierter Position zwischen zwei Stützen platziert wurde. Die Übergänge zwischen verschiedenen Schwingungsmodi des Stahlbetonbrückenmodells konnte mit hoher Auflösung analysiert werden. Auf die Darstellung von Details wird hier jedoch verzichtet.

Die hierin beschriebene spektrale Rückstreuanalyse ermöglicht auch die Bestimmung des algebraischen Vorzeichens der Dehnungsänderung, die für eine Vielzahl von Sensoranwendungen von entscheidender Bedeutung ist. Der verwendete Aufbau zum vorzeichenrichtigen Bestimmen einer Änderung eines Parameters zeichnet sich durch eine einfache, robuste und kostengünstige Architektur aus und realisiert ein Wellenlängen-Scanning durch direkte Laserstrommodulation.

Andere phasenaufgelöste Ansätze sind deutlich aufwendiger. Sie benötigen oftmals eine hochkohärente Lichtquelle, ein aufwändiges Polarisationsmanagement, abstimmbare Laser und Filter, eine Interferometerstabilisierung, eine Hochfrequenzsignalgenerierung oder/und eine Detektion mit hoher Bandbreite.

Gemäß einer Ausführungsform umfasst ein Verfahren zum vorzeichenrichtigen Bestimmen einer Änderung eines physikalischen Parameters ein Einkoppeln einer ersten Pulsfolge in eine optische Faser, die zumindest in einem Abschnitt Rayleighstreuer aufweist, wobei die erste Pulsfolge eine Vielzahl in der optischen Faser jeweils zumindest im Wesentlichen kohärenter optischer Pulse gleicher Pulsdauer aufweist, und wobei sich eine optische Frequenz der Pulse in der ersten Pulsfolge streng monoton ändert. Es wird ein erstes Leistungsspektrum bestimmt. Das Bestimmen des ersten Leistungsspektrums umfasst ein Messen einer jeweiligen Leistung eines von den Rayleighstreuern in der optischen Faser rückgestreuten Signalanteils für jeden der optischen Pulse der ersten Pulsfolge. Es wird eine zweite Pulsfolge in die optische Faser eingekoppelt, wobei die zweite Pulsfolge zumindest im Wesentlichen der ersten Pulsfolge oder einer Permutation der ersten Pulsfolge entspricht. Es wird ein zweites Leistungsspektrum bestimmt. Das Bestimmen des zweiten Leistungsspektrums umfasst ein Messen einer jeweiligen Leistung eines von den Rayleighstreuern in der optischen Faser rückgestreuten Signalanteils für jeden der optischen Pulse der zweiten Pulsfolge. Es erfolgt ein vorzeichenrichtiges Bestimmen einer Änderung eines physikalischen Parameters, insbesondere eine Dehnung und/oder einer Temperatur der optischen Faser. Das vorzeichenrichtige Bestimmen der Änderung des physikalischen Parameters umfasst ein Bestimmen eines Versatzes zwischen dem zweiten Leistungsspektrums und dem ersten Leistungsspektrums. Das Einkoppeln der jeweiligen Pulsfolge umfasst eine (direkte) Modulation eines Speisestroms und/oder einer Temperatur eines mit der optischen Faser gekoppelten Dauerstrichlasers.

Typischerweise umfasst die Modulation des Speisestroms ein monotones Ändern, noch typischer ein streng monotones Ändern des Speisestroms.

Typischerweise wird der Speisestrom des Dauerstrichlasers während der gesamten Zeitdauer des Einkoppelns der jeweiligen Pulsfolge streng monoton geändert.

Außerdem werden das erste und das zweite Leistungsspektrum typischerweise für mehrere in Richtung einer Faserachse der optischen Faser voneinander beabstandete Orte im Rayleighstreuer aufweisenden Abschnitt der optischen Faser bestimmt.

Gemäß einem Ausführungsbeispiel umfasst ein Verfahren zum vorzeichenrichtigen Bestimmen einer Änderung eines physikalischen Parameters ein Einkoppeln einer ersten Pulsfolge in eine optische Faser, die zumindest in einem Abschnitt Rayleighstreuer aufweist, sodass die erste Pulsfolge mehrere in der optischen Faser jeweils zumindest im Wesentlichen kohärente optische Pulse gleicher Pulsdauer aufweist, wobei sich eine optische Frequenz der Pulse in der ersten Pulsfolge streng monoton, ändert. Es wird ein erstes Leistungsspektrum bestimmt. Das Bestimmen des ersten Leistungsspektrums umfasst ein Messen einer jeweiligen Leistung eines von den Rayleighstreuern rückgestreuten Signalanteils für jeden der optischen Pulse der ersten Pulsfolge. Es wird eine zweite Pulsfolge in die optische Faser eingekoppelt, sodass die zweite Pulsfolge mehrere in der optischen Faser jeweils zumindest im Wesentlichen kohärente optische Pulse gleicher Pulsdauer aufweist, wobei sich eine optische Frequenz der Pulse in der zweiten Pulsfolge streng monoton, ändert. Es wird ein zweites Leistungsspektrum bestimmt. Das Bestimmen des zweiten Leistungsspektrums umfasst ein Messen einer jeweiligen Leistung eines von den Rayleighstreuern rückgestreuten Signalanteils für jeden der optischen Pulse der zweiten Pulsfolge. Es erfolgt ein vorzeichenrichtiges Bestimmen einer Änderung eines physikalischen Parameters der optischen Faser. Das vorzeichenrichtige Bestimmen der Änderung des physikalischen Parameters umfasst ein Bestimmen eines Versatzes zwischen dem zweiten Leistungsspektrum und dem ersten Leistungsspektrum. Das Einkoppeln der jeweiligen Pulsfolge umfasst ein monotones Ändern, d.h. entweder ein monotones Verringern oder ein monotones Erhöhen, typischerweise ein streng monotones Ändern, d.h. ein streng monotones Verringern oder ein streng monotones Erhöhen, eines Speisestroms und/oder einer Temperatur eines mit der optischen Faser gekoppelten Dauerstrichlasers.

Die Pulsdauer in der zweiten Pulsfolge entspricht typischerweise der Pulsdauer in der ersten Pulsfolge.

Die optischen Frequenzen der Pulse in der zweiten Pulsfolge können den optischen Frequenzen der Pulse in der ersten Pulsfolge entsprechen.

Eine Reihenfolge der optischen Frequenzen der optischen Pulse der zweiten Pulsfolge kann zumindest im Wesentlichen einer Reihenfolge der optischen Frequenzen der optischen Pulse der ersten Pulsfolge oder einer Permutation davon, insbesondere einer umgekehrten Reihenfolge der optischen Frequenzen der optischen Pulse der ersten Pulsfolge entsprechen.

Die zweite Pulsfolge kann sogar zumindest im Wesentlichen der ersten Pulsfolge, einer Permutation der ersten Pulsfolge, einem Teil der ersten Pulsfolge oder einer Permutation des Teils der ersten Pulsfolge entsprechen.

Es ist aber auch möglich, dass die Reihenfolge der optischen Frequenzen der optische Pulse der ersten Pulsfolge einer Reihenfolge der optischen Frequenzen der optischen Pulse eines (zusammenhängenden) Teils der zweiten Pulsfolge, einer Permutation davon, insbesondere einer umgekehrten Reihenfolge der optischen Frequenzen der optischen Pulse des Teils der zweiten Pulsfolge entsprechen, oder sogar, dass die erste Pulsfolge zumindest im Wesentlichen einem Teil der zweiten Pulsfolge oder einer Permutation des Teils der zweiten Pulsfolge entspricht.

Die Menge der optischen Frequenzen der Pulse in der zweiten Pulsfolge kann eine (echte) Teilmenge der optischen Frequenzen der Pulse in der ersten Pulsfolge sein.

Es ist aber auch möglich, dass die Menge der optischen Frequenzen der Pulse in der zweiten Pulsfolge disjunkt zur Menge der optischen Frequenzen der Pulse in der ersten Pulsfolge ist, bspw. dann, wenn sich Absolutwerte der Anstiege beim Verringern oder Erhöhen des Speisestroms und/oder der Temperatur des Dauerstrichlasers beim Erzeugen/Einkoppeln der ersten und zweiten Pulsfolge geeignet voneinander unterscheiden, und/oder wenn für die Steuerung des Speisestroms und/oder der Temperatur des Dauerstrichlasers ein an eine nichtlineare Abhängigkeit der optischen Frequenz des Dauerstrichlasers vom Speisestrom und/oder der Temperatur geeignet angepasstes (periodisches) Steuersignal verwendet wird (asymmetrische Frequenzabtastung). Auch dann kann der Versatz zwischen dem zweiten Leistungsspektrum und dem ersten Leistungsspektrum numerisch oder mittels eines neuronalen Netzwerkes genau bestimmt werden.

Ein von den optischen Frequenzen der Pulse in der zweiten Pulsfolge abgedeckter zweiter Frequenzbereich überlappt typischerweise aber zumindest teilweise mit einem von den optischen Frequenzen der Pulse in der ersten Pulsfolge abgedecktem ersten Frequenzbereich. Der zweite Frequenzbereich kann ein (echter) Teilbereich des ersten Frequenzbereichs sein. Beispielsweise kann vorgesehen sein, für die erste Pulsfolge (Referenzmessung) im Vergleich zur zweiten Pulsfolge einen größeren ersten Frequenzbereich und/oder eine höhere Abtastrate / kleinere Schrittweite zwischen aufeinanderfolgenden optischen Frequenzen zu verwenden. Dies ermöglicht, beispielsweise über eine Mittelung und/oder Interpolation ein besonders rauscharmes Referenzspektrum zu erzeugen. Da das Änderungsspektrum (zweites Leistungsspektrum) bzw. die Änderungsspektren mit geringerer Frequenzauflösung der Pulse bestimmt werden, wird die gesamte Messzeit nur unwesentlich verlängert.

Es ist aber auch möglich, dass der erste Frequenzbereich ein Teilbereich des zweiten Frequenzbereichs ist, und/oder dass die Menge der optischen Frequenzen der Pulse in der ersten Pulsfolge eine (echte) Teilmenge der optischen Frequenzen der Pulse in der zweiten Pulsfolge ist.

Die vorliegende Erfindung wurde anhand von Ausführungsbeispielen erläutert. Diese Ausführungsbeispiele sollen keinesfalls als einschränkend für die vorliegende Erfindung verstanden werden. Insbesondere können einzelne Merkmale der verschiedenen Ausführungsbeispiele in andere Ausführungsformen übernommen werden oder verschiedene Ausführungsbeispiele miteinander kombiniert werden, solange sich die kombinierten Merkmale nicht technisch bedingt gegenseitig ausschließen. Die Erfindung ist so, wie sie in den nachfolgenden Ansprüchen definiert ist.

**Patentansprüche**

1. Verfahren (1000) zum vorzeichenrichtigen Bestimmen einer Änderung eines physikalischen Parameters ($\Delta\varepsilon$, $\Delta T$), wobei das Verfahren umfasst:

   - Einkoppeln einer ersten Pulsfolge in eine optische Faser (60), die zumindest in einem Abschnitt Rayleighstreuer aufweist, wobei die erste Pulsfolge mehrere (m+1) in der optischen Faser (60) jeweils zumindest im Wesentlichen kohärente optische Pulse ($\Pi_p$) gleicher Pulsdauer ($\tau_d$) aufweist, und wobei sich eine optische Frequenz ($v_p = v_0 + \Delta v_p$) in der ersten Pulsfolge streng monoton ändert;
   - Bestimmen eines ersten Leistungsspektrums ($I(t_{ref}, t_z, \Delta v_p)$) umfassend Messen einer jeweiligen Leistung ($I(t_{ref}, t_z)$) eines von den Rayleighstreuern rückgestreuten Signalanteils für jeden der optischen Pulse ($\Pi_p$) der ersten Pulsfolge;
   - Einkoppeln einer zweiten Pulsfolge in die optische Faser (60), wobei die zweite Pulsfolge zumindest im Wesentlichen der ersten Pulsfolge, einer Permutation der ersten Pulsfolge, einem Teil der ersten Pulsfolge oder einer Permutation des Teils der ersten Pulsfolge entspricht, und/oder wobei sich eine optische Frequenz ($v_p$) in der zweiten Pulsfolge streng monoton ändert;
   - Bestimmen eines zweiten Leistungsspektrums ($I(t_s, t_z, \Delta v_p)$) umfassend Messen einer jeweiligen Leistung ($I(t_s, t_z)$) eines von den Rayleighstreuern rückgestreuten Signalanteils für jeden der optischen Pulse ($\Pi_p$) der zweiten Pulsfolge; und
   - Vorzeichenrichtiges Bestimmen einer Änderung eines physikalischen Parameters ($\Delta\varepsilon$, $\Delta T$) der optischen Faser (60) umfassend Bestimmen eines Versatzes ($\Delta v_m$) zwischen dem zweiten Leistungsspektrum und dem ersten Leistungsspektrum,

   wobei das Einkoppeln der jeweiligen Pulsfolge ein monotones Verringern oder Erhöhen eines Speisestroms (i) und/oder einer Temperatur eines mit der optischen Faser (60) gekoppelten Dauerstrichlasers (10) umfasst.

2. Verfahren nach Anspruch 1, wobei der Dauerstrichlaser (10) eine Laserdiode ist, wobei der Dauerstrichlaser (10) über einen Modulator (50), der korreliert mit dem Speisestrom (i) moduliert wird, mit der optischen Faser (60) gekoppelt ist, und/oder wobei der Speisestrom (i) während des Einkoppelns der jeweiligen Pulsfolge linear verringert oder erhöht wird.

3. Verfahren nach Anspruch 1 oder 2, weiter umfassend Bestimmen einer Kalibrierungskurve umfassend Variieren des Speisestroms (i) des Dauerstrichlasers (10) und Bestimmen einer optischen Frequenz (v) und/oder einer optischen Frequenzänderung ($\Delta v$) des Dauerstrichlasers (10) als Funktion des Speisestroms (i).

4. Verfahren nach Anspruch 3, weiter umfassend:

   - Verwenden der Kalibrierungskurve zum Bestimmen eines zeitlichen Verlaufs des Speisestroms (i) beim Einkoppeln, sodass sich die optische Frequenz ($v_p$) der eingekoppelten jeweiligen Pulsfolge linear mit einem Index (p=0, 1, 2...m) der Pulsfolge ändert, und/oder die optische Frequenzänderung ($\Delta v_p$) zwischen aufeinanderfolgenden Pulsen ($\Pi_p$) der eingekoppelten jeweiligen Pulsfolge konstant ist, oder
   - Verwenden der Kalibrierungskurve zum Korrigieren des ersten Leistungsspektrums ($I(t_{ref}, t_z, \Delta v_p)$) und des zweiten Leistungsspektrums ($I(t_s, t_z, \Delta v_p)$).

5. Verfahren nach einem der vorangehenden Ansprüche, wobei die Schritte:

   - Einkoppeln der zweiten Pulsfolge in die optische Faser (60);

- Bestimmen des zweiten Leistungsspektrums ($I(t_s, t_z, \Delta\nu_p)$) umfassend Messen einer jeweiligen Leistung ($I(t_s, t_z)$) eines von den Rayleighstreuern rückgestreuten Signalanteils für jeden der optischen Pulse ($\Pi_p$) der zweiten Pulsfolge; und
- Vorzeichenrichtiges Bestimmen der Änderung des physikalischen Parameters ($\Delta\varepsilon\Delta T$) der optischen Faser (60),

mehrfach wiederholt werden.

6. Verfahren nach einem der vorangehenden Ansprüche, weiter umfassend:

    - zumindest teilweises Einbetten der optischen Faser (60) in ein zu untersuchendes Objekt, insbesondere ein Bauwerk, und/oder Befestigen der optischen Faser (60) an dem zu untersuchenden Objekt;
    - Ergänzen des ersten Leistungsspektrums ($I(t_{ref}, t_z, \Delta\nu_p)$) um Wertepaare (b*) des zweiten Leistungsspektrums ($I(t_s, t_z, \Delta\nu_p)$, die keine Entsprechung im ersten Leistungsspektrum ($I(t_{ref}, t_z, \Delta\nu_p)$) aufweisen, und/oder eines Spektrumsabschnitts des zweiten Leistungsspektrums ($I(t_s, t_z, \Delta\nu_p)$), das keine Entsprechung im ersten Leistungsspektrum ($I(t_{ref}, t_z, \Delta\nu_p)$) aufweist;
    - Verwenden der vorzeichenrichtig bestimmten Änderung des physikalischen Parameters ($\Delta\varepsilon$, $\Delta T$) der optischen Faser (60) zum Überwachen eines Objekts, insbesondere eines Bauwerks und/oder eines Stromnetzes; und/oder
    - Verwenden der vorzeichenrichtig bestimmten Änderung des physikalischen Parameters ($\Delta\varepsilon$, $\Delta T$) der optischen Faser (60) zum Bestimmen einer Bodenbewegung, eines seismischen Signals.

7. Verfahren nach einem der vorangehenden Ansprüche, wobei die zweite Pulsfolge zumindest im Wesentlichen einer invertierten ersten Pulsfolge entspricht, wobei die zweite Pulsfolge zumindest im Wesentlichen der ersten Pulsfolge oder einer Permutation der ersten Pulsfolge, einem Teil der ersten Pulsfolge oder einer Permutation des Teils der ersten Pulsfolge entspricht, und/oder wobei eine Reihenfolge der optischen Frequenzen der zweiten Pulsfolge zumindest im Wesentlichen einer Reihenfolge der optischen Frequenzen der ersten Pulsfolge, einer Permutation der Reihenfolge der optischen Frequenzen der ersten Pulsfolge, einer Reihenfolge der optischen Frequenzen eines Teils der ersten Pulsfolge oder einer Permutation der Reihenfolge der optischen Frequenzen des Teils der ersten Pulsfolge entspricht, wobei die jeweiligen Pulsfolgen mehr als zwei Pulse ($\Pi_p$), zumindest 10 Pulse ($\Pi_p$), typischerweise sogar zumindest 50 Pulse ($\Pi_p$) aufweist, wobei die Pulsdauer ($\tau_d$) höchstens 100 ns oder sogar höchstens 50 ns beträgt, wobei eine Dauer der jeweiligen Pulsfolgen höchstens 250 ms, typischerweise höchstens 50 ms, höchstens 1 ms oder sogar höchstens 0,1 ms beträgt, wobei das Bestimmen des zweiten Leistungsspektrums ($I(t_s, t_z, \Delta\nu_p)$) bis zu zumindest einmal pro Millisekunde erfolgt, und/oder das vorzeichenrichtige Bestimmen der Änderung des physikalischen Parameters ($\Delta\varepsilon$, $\Delta T$) bis zu zumindest einmal pro Millisekunde erfolgt.

8. Verfahren nach einem der vorangehenden Ansprüche, wobei die erste Pulsfolge eine Folge von Doppelpulsen ist, wobei ein Pulsabstand zwischen den Pulsen eines jeweiligen Doppelpulses geringer ist als ein Pulsabstand zwischen aufeinanderfolgenden Doppelpulsen, wobei der Pulsabstand zwischen den Pulsen der Doppelpulse so ausgewählt ist, dass die Pulse der Doppelpulse miteinander interferieren können, wobei die Pulsabstände ($\tau_p$) in der ersten Pulsfolge so ausgewählt sind, dass zu jedem Zeitpunkt höchstens zwei der Pulse durch die optischen Faser (60) propagieren, wobei sich die optischen Frequenzen in der ersten Pulsfolge über einen größeren Bereich oder einen kleineren Bereich ändert als die optischen Frequenzen in der zweiten Pulsfolge, wobei sich eine Pulsanzahl der ersten Pulsfolge von einer Pulsanzahl der zweiten Pulsfolge unterscheidet, wobei die Menge der optischen Frequenzen in der ersten Pulsfolge disjunkt zur Menge der optischen Frequenzen in der zweiten Pulsfolge ist, und/oder wobei ein Pulsabstand ($\tau_p$) in der ersten Pulsfolge so ausgewählt ist, dass zu jedem Zeitpunkt höchstens einer der Pulse ($\Pi_p$) durch die optische Faser (60) propagiert, und/oder dass ein neuer Puls erst dann in die die optische Faser (60) eingekoppelt wird, wenn der von den Rayleighstreuern rückgestreute Signalanteil des vorangegangenen Pulses ($\Pi_p$) abgeklungen oder ausgekoppelt ist.

9. Verfahren nach einem der vorangehenden Ansprüche, wobei das vorzeichenrichtige Bestimmen ein Berechnen einer Änderung einer Amplitude des physikalischen Parameters ($\Delta\varepsilon$, $\Delta T$) umfasst, wobei der physikalische Parameter eine Dehnung oder eine Temperatur ist, und/oder wobei der physikalische Parameter eine von der Dehnung und/oder eine von der Temperatur abhängige Größe, insbesondere eine Feuchte oder eine Biegung ist.

10. Verfahren nach einem der vorangehenden Ansprüche, wobei das vorzeichenrichtige Bestimmen der Änderung des physikalischen Parameters eine Korrelationsanalyse des ersten Leistungsspektrums ($I(t_{ref}, t_z, \Delta\nu_p)$) und des zweiten Leistungsspektrums ($I(t_s, t_z, \Delta\nu_p)$) entlang der Frequenzachse ($\Delta\nu_p$) und/oder eine Korrelationsanalyse des ersten Leistungsspektrums ($I(t_{ref}, t_z, \Delta\nu_p)$) und des zweiten Leistungsspektrums ($I(t_s, t_z, \Delta\nu_p)$) entlang der Zeitachse ($t_z$)

umfasst.

11. Verfahren nach einem der vorangehenden Ansprüche, wobei das Bestimmen des Versatzes ($\Delta\nu_{\mathrm{m}}$) ein Berechnen eines quadratischen Abstands zwischen einem um eine Frequenzverschiebung ($\Delta\nu_q$) verschobenen ersten Leistungsspektrum ($I(t_{ref}, t_z, \Delta\nu_{p+q})$) und dem zweiten Leistungsspektrum ($I(t_s, t_z, \Delta\nu_p)$) oder zwischen dem ersten Leistungsspektrum ($I(t_{ref}, t_z, \Delta\nu_p)$) und einem um die Frequenzverschiebung ($\Delta\nu_q$) verschobenen zweiten Leistungsspektrum ($I(t_s, t_z, \Delta\nu_{p-q})$), insbesondere ein Summieren der quadratischen Abstände für mehrere Frequenzverschiebungen ($\Delta\nu_q$) zum Bestimmen einer Korrelationsfunktion (R), ein Minimieren der Korrelationsfunktion, ein Interpolieren der Korrelationsfunktion (R) zum Erzeugen einer interpolierten Korrelationsfunktion und/oder ein Minimieren der interpolierten Korrelationsfunktion umfasst, und/oder, wobei das Bestimmen des Versatzes ($\Delta\nu_{\mathrm{m}}$) mittels eines trainierten neuronalen Netzes erfolgt, und/oder wobei das Korrigieren des ersten Leistungsspektrums ($I(t_{ref}, t_z, \Delta\nu_p)$) und des zweiten Leistungsspektrums ($I(t_s, t_z, \Delta\nu_p)$) mittels eines weiteren trainierten neuronalen Netzes erfolgt.

12. Verfahren nach einem der vorangehenden Ansprüche, wobei die Leistungswerte im ersten Leistungsspektrum und/oder im zweiten Leistungsspektrum in der optischen Faser (60) ortsaufgelöst gemessen werden, und/oder wobei der Versatz ($\Delta\nu_{\mathrm{m}}$) für mehrere Orte in der optischen Faser (60) bestimmt wird.

13. Vorrichtung (100 - 104) eingerichtet zur Durchführung eines Verfahrens gemäß einem der Ansprüche 1 bis 12 zum vorzeichenrichtigen Bestimmen einer Änderung eines Parameters ($\Delta\varepsilon$, $\Delta T$), umfassend:

   - eine optische Faser (60), die zumindest in einem Abschnitt Rayleighstreuer aufweist;
   - einen mit der optischen Faser (60) gekoppelten Dauerstrichlaser (10) zum Erzeugen eines zumindest im Wesentlichen kohärenten Lasersignals;
   - einen zwischen dem Dauerstrichlaser (10) und der optischen Faser (60) angeordneten Modulator (50) zum Umwandeln des Lasersignals in optische Pulse ($\Pi_p$);
   - einen Signalgenerator (20) aufweisend einen mit einem Steuereingang des Modulators (50) verbundenen ersten Signalausgang zum Ausgeben von Pulssignalen für das Umwandeln des Lasersignals in optische Pulse ($\Pi_p$), und einen mit dem Dauerstrichlasers (10) verbundenen zweiten Signalausgang zum Ausgeben eines sich abschnittsweise monoton ändernden Steuersignals für einen Speisestrom (i) des Dauerstrichlasers (10) und/oder eine Temperiereinheit des Dauerstrichlasers (10); und
   - eine mit der optische Faser (60) gekoppelte Detektionseinheit (64, 70, 40) zum Messen von jeweiligen Rayleighrückstreuleistungen ($I(t_s, t_z)$) für die sich in der optischen Faser (60) ausbreitenden optischen Pulse ($\Pi_p$).

14. Vorrichtung (100 - 104) nach Anspruch 13, wobei eine Kohärenzlänge des Lasersignals in der optischen Faser (60) und/oder der optischen Pulse ($\Pi_p$) in der optischen Faser (60) zumindest 10 m beträgt, wobei der Dauerstrichlaser (10) eine Laserdiode ist, wobei die Pulssignale Rechteckpulse oder Gaußpulse umfassen, wobei das Steuersignal ein abschnittsweise lineares Signal und/oder ein oszillierendes Signal ist, wobei das Steuersignal ein Sägezahnsignal, ein Dreieckssignal, oder ein Sinussignal ist, wobei die Pulssignale zeitlich mit dem Steuersignal korreliert sind, wobei die Detektionseinheit (64, 70, 40) eingerichtet ist, die jeweiligen Rayleighrückstreuleistungen ($I(t_s, t_z)$) in der optischen Faser (60) ortsaufgelöst zu bestimmen, wobei der Abschnitt und/oder die optische Faser (60) eine Länge von zumindest 10 m aufweist, wobei die optischen Faser (60) teilweise in ein zu überwachendes Objekt, insbesondere ein Bauwerk und/oder ein Kabel eines Stromnetzes eingebettet und/oder an dem Objekt befestigt ist, und/oder wobei die Detektionseinheit (64, 70, 40) einen optischen Vorverstärker (62), einen optischen Filter (64), eine Fotodiode (70), eine Avalanche-Fotodiode und/oder einen mit einem Triggersignalausgang des Signalgenerators verbundenen Analog-Digital-Wandler (40) aufweist.

15. Vorrichtung (100 - 104) nach Anspruch 13 oder 14, weiter umfassend eine Steuer- und Auswerteeinheit (80), die mit dem Signalgenerator (20) gekoppelt ist, die mit dem Detektionseinheit (64, 70, 40) gekoppelt ist, und/oder die eingerichtet ist ein Verfahren nach einem der Ansprüche 1 bis 12 auszuführen.

**Claims**

1. A method (1000) for determining a change of a physical parameter ($\Delta\varepsilon$, $\Delta T$) with the correct sign, the method comprising:

   - coupling a first pulse sequence into an optical fiber (60) comprising Rayleigh scatterers in at least in one portion, the first pulse sequence including a plurality (m+1) of at least substantially coherent optical pulses ($\Pi_p$)

of identical pulse duration ($\tau_d$) in the optical fiber (60), wherein an optical frequency ($\nu_p = \nu_0 + \Delta\nu_p$) of the first pulse sequence changes strictly monotonically;

- determining a first power spectrum ($I(t_{ref}, t_z, \Delta\nu_p)$), comprising measuring a respective power ($I(t_{ref}, t_z)$), of a signal component backscattered by the Rayleigh scatterers for each of the optical pulses ($\Pi_p$) of the first pulse sequence;
- coupling a second pulse sequence into the optical fiber (60), the second pulse sequence corresponding at least substantially to the first pulse sequence, a permutation of the first pulse sequence, a part of the first pulse sequence or a permutation of a part of the first pulse sequence, and/or an optical frequency ($\nu_p$) in the second pulse sequence changing strictly monotonically;
- determining a second power spectrum ($I(t_s, t_z, \Delta\nu_p)$), comprising measuring a respective power ($I(t_s, t_z)$) of a signal component backscattered by the Rayleigh scatterers for each of the optical pulses ($\Pi_p$) of the second pulse sequence; and
- determining, with the correct sign, a change of a physical parameter ($\Delta\varepsilon, \Delta T$), of the optical fiber (60), comprising determining an offset ($\Delta\nu_m$) between the second power spectrum and the first power spectrum,

wherein coupling of the respective pulse sequence comprises monotonically decreasing or increasing a feed current (i) and/or a temperature of a continuous-wave laser (10) coupled to the optical fiber (60).

2. The method according to claim 1, wherein the continuous-wave laser (10) is a laser diode, the continuous-wave laser (10) is coupled to the optical fiber (60) by way of a modulator (50), which is modulated in a manner that correlates with the feed current (i), and/or the feed current (i) is linearly decreased or increased while the respective pulse sequence is coupled in.

3. The method according to claim 1 or 2, furthermore comprising determining a calibration curve, comprising varying the feed current (i) of the continuous-wave laser (10) and determining an optical frequency ($\nu$) and/or an optical frequency change ($\Delta\nu$) of the continuous-wave laser (10) as a function of the feed current (i).

4. The method according to claim 3, furthermore comprising:

- using the calibration curve for determining a time course of the feed current (i) during coupling so that the optical frequency ($\nu_p$) of the respective coupled pulse sequence changes linearly with an index (p = 0, 1, 2 ... m) of the pulse sequence, and/or the optical frequency change ($\Delta\nu_p$) between consecutive pulses ($\Pi_p$) of the respective coupled pulse sequence is constant, or
- using the calibration curve for correcting the first power spectrum ($I(t_{ref}, t_z, \Delta\nu_p)$) and the second power spectrum ($I(t_s, t_z, \Delta\nu_p)$).

5. A method according to any one of the preceding claims, wherein the steps of:

- coupling the second pulse sequence into the optical fiber (60);
- determining the second power spectrum ($I(t_s, t_z, \Delta\nu_p)$), comprising measuring a respective power ($I(t_s, t_z)$) of a signal component backscattered by the Rayleigh scatterers for each of the optical pulses ($\Pi_p$) of the second pulse sequence; and
- determining, with the correct sign, the change of the physical parameter ($\Delta\varepsilon, \Delta T$) of the optical fiber (60),

are repeated multiple times.

6. A method according to any one of the preceding claims, furthermore comprising:

- at least partially embedding the optical fiber (60) in an object to be examined, in particular a structure, and/or attaching the optical fiber (60) to the object to be examined;
- supplementing the first power spectrum ($I(t_{ref}, t_z, \Delta\nu_p)$) with value pairs (b*) of the second power spectrum ($I(t_s, t_z, \Delta\nu_p)$) that have no equivalence in the first power spectrum ($I(t_{ref}, t_z, \Delta\nu_p)$), and/or of a spectrum portion of the second power spectrum ($I(t_{ref}, t_z, \Delta\nu_p)$) that has no equivalence in the first power spectrum ($I(t_{ref}, t_z, \Delta\nu_p)$);
- using the change, determined with the correct sign, of the physical parameter ($\Delta\varepsilon, \Delta T$) of the optical fiber (60) for monitoring an object, in particular a structure and/or a power grid; and/or
- using the change, determined with the correct sign, of the physical parameter ($\Delta\varepsilon, \Delta T$) of the optical fiber (60) for determining an earth shifting of a seismic signal.

7. A method according to any one of the preceding claims, wherein the second pulse sequence at least substantially corresponds to an inverted first pulse sequence, the second pulse sequence at least substantially corresponds to the first pulse sequence or a permutation of the first pulse sequence, a part of the first pulse sequence or a permutation of the part of the first pulse sequence, and/or wherein an order of the optical frequencies of the second pulse sequence at least substantially corresponds to an order of the optical frequencies of the first pulse sequence, a permutation of the order of the optical frequencies of the first pulse sequence, an order of the optical frequencies of a part of the first pulse sequence or a permutation of the order of the optical frequencies of the part of the first pulse sequence, the respective pulse sequences including more than two pulses ($\Pi_p$), at least 10 pulses ($\Pi_p$), and typically even at least 50 pulses ($\Pi_p$), the pulse duration ($\tau_d$) being no larger than 100 ns or even no larger than 50 ns, a duration of the respective pulse sequences being no larger than 250 ms, typically no larger than 50 ms, no larger than 1 ms or even no larger than 0.1 ms, the determination of the second power spectrum ($I(t_s, t_z, \Delta\nu_p)$) being performed up to at least once per millisecond, and/or the correctly signed determination of the change of the physical parameter ($\Delta\varepsilon, \Delta T$) being performed up to at least once per millisecond.

8. A method according to any one of the preceding claims, wherein the first pulse sequence is a succession of double pulses, a pulse spacing between the pulses of a respective double pulse being less than a pulse spacing between consecutive double pulses, the pulse spacing between the pulses of the double pulses being selected so that the pulses of the double pulses can interfere with one another, the pulse spacings ($\tau_p$) in the first pulse sequence being selected so that, at any point in time, no more than two of the pulses propagate through the optical fiber (60), the optical frequencies in the first pulse sequence changing over a larger range or a smaller range than the optical frequencies in the second pulse sequence, a pulse count of the first pulse sequence differing from a pulse count of the second pulse sequence, the set of optical frequencies in the first pulse sequence being disjoint with respect to the set of optical frequencies in the second pulse sequence, and/or wherein a pulse spacing ($\tau_p$) in the first pulse sequence is selected so that, at any point in time, no more than one of the pulses ($\Pi_p$) propagates through the optical fiber (60) and/or that a new pulse is only coupled into the optical fiber (60) when the signal component of the preceding pulse ($\Pi_p$) backscattered by the Rayleigh scatters has decayed or been out-coupled.

9. A method according to any one of the preceding claims, wherein the determination with the correct sign comprises calculating a change of an amplitude of the physical parameter ($\Delta\varepsilon, \Delta T$), the physical parameter being an expansion or a temperature, and/or the physical parameter being a variable dependent on the expansion and/or on the temperature, in particular moisture or flexure.

10. A method according to any one of the preceding claims, wherein the determination of the change of the physical parameter with the correct sign comprises a correlation analysis of the first power spectrum ($I(t_{ref}, t_z, \Delta\nu_p)$) and of the second power spectrum ($I(t_s, t_z, \Delta\nu_p)$) along the frequency axis ($\Delta\nu_p$) and/or a correlation analysis of the first power spectrum ($I(t_{ref}, t_z, \Delta\nu_p)$) and of the second power spectrum ($I(t_s, t_z, \Delta\nu_p)$) along the time axis ($t_z$).

11. A method according to any one of the preceding claims, wherein the determination of the offset ($\Delta v_m$) comprises calculating a quadratic distance between a first power spectrum ($I(t_{ref}, t_z, \Delta\nu_p)$) shifted by a frequency shift ($\Delta\nu_p$) and the second power spectrum ($I(t_s, t_z, \Delta\nu_p)$) or between the first power spectrum ($I(t_{ref}, t_z, \Delta\nu_p)$) and a second power spectrum ($I(t_s, t_z, \Delta\nu_p)$) shifted by the frequency shift ($\Delta\nu_q$), in particular adding up the quadratic distances for multiple frequency shifts ($\Delta\nu_q$) for determining a correlation function (R), minimizing the correlation function, interpolating the correlation function (R) for generating an interpolated correlation function and/or minimizing the interpolated correlation function, and/or wherein the determination of the offset ($\Delta v_m$) is carried out by means of a trained neural network, and/or wherein the correction of the first power spectrum ($I(t_{ref}, t_z, \Delta\nu_p)$) and of the second power spectrum ($I(t_s, t_z, \Delta\nu_p)$) is carried out by means of a further trained neural network.

12. A method according to any one of the preceding claims, wherein the power values in the first power spectrum and/or in the second power spectrum are measured in a spatially resolved manner in the optical fiber (60) and/or wherein the offset ($\Delta v_m$) is determined for multiple locations in the optical fiber (60).

13. A device (100 - 104), configured to carry out a method according to any one of claims 1 to 12 for determining a change of a parameter ($\Delta\varepsilon, \Delta T$) with the correct sign, comprising:

  - an optical fiber (60) comprising Rayleigh scatterers in at least one portion;
  - a continuous-wave laser (10) coupled to the optical fiber (60) for generating an at least substantially coherent laser signal;
  - a modulator (50) arranged between the continuous-wave laser (10) and the optical fiber (60) for converting the laser signal into optical pulses ($\Pi_p$);
- a signal generator (20) comprising a first signal output connected to a control input of the modulator (50) for outputting pulse signals for the conversion of the laser signal into optical pulses ($\Pi_p$), and a second signal output connected to the continuous-wave laser (10) for outputting a control signal changing monotonically in sections for a feed current (i) of the continuous-wave laser (10) and/or a temperature control unit of the continuous-wave laser (10); and
- a detection unit (64, 70, 40) coupled to the optical fiber (60) for measuring respective Rayleigh backscattering powers ($I(t_s, t_z)$) for the optical pulses ($\Pi_p$) propagating in the optical fiber (60).

14. The device (100 - 104) according to claim 13, wherein a coherence length of the laser signal in the optical fiber (60) and/or of the optical pulses ($\Pi_p$) in the optical fiber (60) is at least 10 m, the continuous-wave laser (10) being a laser diode, the pulse signals comprising rectangular pulses or Gaussian pulses, the control signal being a linear signal in portions and/or an oscillating signal, the control signal being a sawtooth signal, a triangular signal or a sine signal, the pulse signals being temporally correlated with the control signal, the detection unit (64, 70, 40) being configured to determine, in a spatially resolved manner, the respective Rayleigh backscattering powers ($I(t_s, t_z)$) ($I(t_s, t_z)$) in the optical fiber (60), the portion and/or the optical fiber (60) having a length of at least 10 m, the optical fiber (60) being partially embedded into an object to be monitored, in particular a structure and/or a cable of a power grid, and/or attached to the object, and/or the detection unit (64, 70, 40) comprising an optical pre-amplifier (62), an optical filter (64), a photodiode (70), an avalanche photodiode and/or an analog-to-digital converter (40) connected to a trigger signal output of the signal generator.

15. The device (100 - 104) according to claim 13 or 14, furthermore comprising a control and evaluation unit (80), which is coupled to the signal generator (20), coupled to the detection unit (64, 70, 40) and/or configured to carry out a method according to any one of claims 1 to 12.

## Revendications

1. Procédé (100) pour la détermination, avec le bon signe, d'une variation d'un paramètre physique ($\Delta\varepsilon$, $\Delta T$), dans lequel le procédé comprend :

   - introduction d'une première série d'impulsions dans une fibre optique (60), qui comprend, au moins dans une portion, des diffuseurs de Rayleigh, dans lequel la première série d'impulsions comprend respectivement plusieurs (m+1) impulsions ($\Pi_p$) au moins sensiblement cohérentes optiquement dans la fibre optique (60), de même durée d'impulsion ($\tau_d$), et dans lequel une fréquence optique ($v_p = v_0 + \Delta v_p$) de la première série d'impulsions varie de manière strictement monotone ;
   - détermination d'un premier spectre de puissance ($I(t_{ref}, t_z, \Delta v_p)$) comprenant la mesure d'une puissance respective ($I(t_{ref}, t_z)$) d'une partie de signal rétrodiffusée par les diffuseurs de Rayleigh pour chacune des impulsions optiques ($\Pi_p$) de la première série d'impulsions ;
   - introduction d'une deuxième série d'impulsions dans la fibre optique (60), dans lequel la deuxième série d'impulsions correspond au moins sensiblement à la première série d'impulsions, à une permutation de la première série d'impulsions, à une partie de la première série d'impulsions ou à une permutation de la partie de la première série d'impulsions et/ou dans lequel une fréquence optique ($v_p$) de la deuxième série d'impulsions varie de manière strictement monotone ;
   - détermination d'un deuxième spectre de puissance ($I(t_s, t_z, \Delta v_p)$) comprenant la mesure d'une puissance respective ($I(t_s, t_z)$) d'une partie de signal rétrodiffusée par les diffuseurs de Rayleigh pour chacune des impulsions optiques ($\Pi_p$) de la deuxième série d'impulsions ; et
   - détermination, avec le signe, d'une variation d'un paramètre physique ($\Delta\varepsilon$, $\Delta T$) de la fibre optique (60), comprenant la détermination d'un décalage ($\Delta v_m$) entre le deuxième spectre de puissance et le premier spectre de puissance,

   dans lequel l'introduction de la série d'impulsions respective comprend une diminution ou une augmentation monotone d'un courant d'alimentation (i) et/ou d'une température d'un laser à onde continue (10) couplé avec la fibre optique (60).

2. Procédé selon la revendication 1, dans lequel le laser à onde continue (10) est une diode laser, dans lequel le laser à onde continue (10) est couplé avec la fibre optique (60) par l'intermédiaire d'un modulateur (50) qui est modulé de manière corrélée avec le courant d'alimentation (i) et/ou dans lequel le courant d'alimentation (i) est diminué ou augmenté de manière linéaire pendant l'introduction de la série d'impulsions respective.

3. Procédé selon la revendication 1 ou 2, comprenant en outre la détermination d'une courbe de calibrage comprenant la variation du courant d'alimentation (i) du laser à onde continue (10) et la détermination d'une fréquence optique (v) et/ou d'une variation de fréquence optique ($\Delta$v) du laser à onde continue (10) en fonction du courant d'alimentation (i).

4. Procédé selon la revendication 3, comprenant en outre :

 - utilisation de la courbe de calibrage pour la détermination d'une évolution temporelle du courant d'alimentation (i) lors de l'introduction, de façon à ce que la fréquence optique ($v_p$) de la série d'impulsions respective introduite varie de manière linéaire avec un indice (p = 0, 1, 2... m) de la série d'impulsions et/ou à ce que la variation de fréquence optique ($\Delta v_p$) entre des impulsions ($\Pi_p$) successives de la série d'impulsions respective introduite soit constante ou
 - utilisation de la courbe de calibrage pour la correction du premier spectre de puissance (I($t_{ref}$, $t_z$, $\Delta v_p$)) et du deuxième spectre de puissance (I($t_s$, $t_z$, $\Delta v_p$)).

5. Procédé selon l'une des revendications précédentes, dans lequel les étapes :

 - introduction de la deuxième série d'impulsions dans la fibre optique (60) ;
 - détermination du deuxième spectre de puissance (I($t_s$, $t_z$, $\Delta v_p$)) comprenant la mesure d'une puissance respective (I($t_s$, $t_z$)) d'une partie de signal rétrodiffusée par les diffuseurs de Rayleigh pour chacune des impulsions optiques ($\Pi_p$) de la deuxième série d'impulsions ; et
 - détermination, avec le bon signe, d'une variation du paramètre physique ($\Delta\varepsilon$, $\Delta$T) de la fibre optique (60),

 sont répétées plusieurs fois.

6. Procédé selon l'une des revendications précédentes, comprenant en outre :

 - incorporation au moins partielle de la fibre optique (60) dans un objet à examiner, plus particulièrement un ouvrage de construction, et/ou fixation de la fibre optique (60) à l'objet à examiner ;
 - complémentation du premier spectre de puissance (I($t_{ref}$, $t_z$, $\Delta v_p$)) à l'aide de paires de valeurs (b*) du deuxième spectre de puissance (I($t_s$, $t_z$, $\Delta v_p$)), qui ne présentent aucune correspondance dans le premier spectre de puissance (I($t_{ref}$, $t_z$, $\Delta v_p$)) et/ou d'une portion de spectre du deuxième spectre de puissance (I($t_s$, $t_z$, $\Delta v_p$)), qui ne présente aucune correspondance dans le premier spectre de puissance (I($t_{ref}$, $t_z$, $\Delta v_p$)) ;
 - utilisation de la variation, déterminée avec le bon signe, du paramètre physique ($\Delta\varepsilon$, $\Delta$T) de la fibre optique (60) pour la surveillance d'un objet, plus particulièrement d'un ouvrage de construction et/ou d'un réseau électrique ; et/ou
 - utilisation de la variation, déterminée avec le bon signe, du paramètre physique ($\Delta\varepsilon$, $\Delta$T) de la fibre optique (60) pour la détermination d'un mouvement du sol, d'un signal sismique.

7. Procédé selon l'une des revendications précédentes, dans lequel la deuxième série d'impulsions correspond, au moins sensiblement, à une première série d'impulsions inversée, dans lequel la deuxième série d'impulsions correspond au moins sensiblement à la première série d'impulsions ou à une permutation de la première série d'impulsions, à une partie de la première série d'impulsions ou à une permutation de la partie de la première série d'impulsions et/ou dans lequel une séquence de fréquences optiques de la deuxième série d'impulsions correspond au moins sensiblement à une séquence de fréquences optiques de la première série d'impulsions, à une permutation de la séquence de fréquences optiques de la première série d'impulsions, à une séquence de fréquences optiques d'une partie de la première série d'impulsions ou à une permutation de la séquence de fréquences optiques de la partie de la première série d'impulsions, dans lequel les séries d'impulsions respectives comprennent plus de deux impulsions ($\Pi_p$), au moins 10 impulsions ($\Pi_p$), voire typiquement au moins 50 impulsions ($\Pi_p$), dans lequel la durée des impulsions ($\tau_d$) est de maximum 100 ns voire de 50 ns maximum, dans lequel une durée des séries d'impulsions respectives est de 250 ms maximum, typiquement de 50 ms maximum, de 1 ms maximum voire de 0,1 ms maximum, dans lequel la détermination du deuxième spectre de puissance (I($t_s$, $t_z$, $\Delta v_p$)) a lieu jusqu'à au moins une fois par milliseconde et/ou la détermination, avec le bon signe, de la variation du paramètre physique ($\Delta\varepsilon$, $\Delta$T) a lieu jusqu'à au moins une fois par milliseconde.

8. Procédé selon l'une des revendications précédentes, dans lequel la première série d'impulsions est une série de doubles impulsions, dans lequel une distance entre les impulsions d'une double impulsion est inférieure à une distance entre des doubles impulsions successives, dans lequel la distance entre les impulsions des doubles impulsions est sélectionnée de façon à ce que les impulsions des doubles impulsions puissent interférer entre elles, dans lequel les distances entre les impulsions ($\tau_\rho$) dans la première série d'impulsions sont sélectionnées de façon à ce que, à chaque instant, au maximum deux des impulsions se propagent à travers la fibre optique (60), dans lequel les fréquences optiques dans la première série d'impulsions varient sur une plage plus grande ou une plage plus petite que les fréquences optiques dans la deuxième série d'impulsions, dans lequel un nombre d'impulsions de la première série d'impulsions est différent d'un nombre d'impulsions de la deuxième série d'impulsions, dans lequel la quantité de fréquences optiques dans la première série d'impulsions est disjointe de la quantité de fréquences optiques dans la deuxième série d'impulsions et/ou dans lequel une distance entre les impulsions ($\tau_\rho$) dans la première série d'impulsions est sélectionnée de façon à ce que, à chaque instant, au maximum une des impulsions ($\Pi_p$) se propage à travers la fibre optique (60) et/ou à ce qu'une nouvelle impulsion ne soit introduite dans la fibre optique (60) que lorsque la part de signal de l'impulsion ($\Pi_p$) précédente, rétrodiffusée par les diffuseurs de Rayleigh, est atténuée ou découplée.

9.  Procédé selon l'une des revendications précédentes, dans lequel la détermination avec le bon signe comprend un calcul d'une variation d'une amplitude du paramètre physique ($\Delta\varepsilon$, $\Delta T$), dans lequel le paramètre physique est une dilatation ou une température et/ou dans lequel le paramètre physique est une grandeur dépendant de la dilatation et/ou de la température, plus particulièrement une humidité ou une flexion.

10. Procédé selon l'une des revendications précédentes, dans lequel la détermination avec le bon signe de la variation du paramètre physique comprend une analyse de corrélation du premier spectre de puissance ($I(t_{ref}, t_z, \Delta v_p)$) et du deuxième spectre de puissance ($I(t_s, t_z, \Delta v_p)$) le long de l'axe de fréquence ($\Delta v_p$) et/ou une analyse de corrélation du premier spectre de puissance ($I(t_{ref}, t_z, \Delta v_p)$) et du deuxième spectre de puissance ($I(t_s, t_z, \Delta v_p)$) le long de l'axe du temps ($t_z$).

11. Procédé selon l'une des revendications précédentes, dans lequel la détermination du décalage ($\Delta v_m$) comprend un calcul d'une distance quadratique entre un premier spectre de puissance ($I(t_{ref}, t_z, \Delta v_{p+q})$) décalé d'un décalage de fréquence ($\Delta v_q$) et le deuxième spectre de puissance ($I(t_s, t_z, \Delta v_p)$) ou entre le premier spectre de puissance ($I(t_{ref}, t_z, \Delta v_p)$) et un deuxième spectre de puissance ($I(t_s, t_z, \Delta v_{p-q})$) décalé du décalage de fréquence ($\Delta v_q$), plus particulièrement une addition des distances quadratiques pour plusieurs décalages de fréquences ($\Delta v_q$) pour la détermination d'une fonction de corrélation (R), une minimisation de la fonction de corrélation, une interpolation de la fonction de corrélation (R) pour la génération d'une fonction de corrélation interpolée et/ou une minimisation de la fonction de corrélation interpolée, et/ou dans lequel la détermination du décalage ($\Delta v_m$) a lieu à l'aide d'un réseau neuronal entraîné et/ou dans lequel la correction du premier spectre de puissance ($I(t_{ref}, t_z, \Delta v_p)$) et du deuxième spectre de puissance ($I(t_s, t_z, \Delta v_p)$) a lieu au moyen d'un autre réseau neuronal entraîné.

12. Procédé selon l'une des revendications précédentes, dans lequel les valeurs de puissance dans le premier spectre de puissance et/ou dans le deuxième spectre de puissance sont mesurées dans la fibre optique (60) avec résolution spatiale et/ou dans lequel le décalage ($\Delta v_m$) est déterminé pour plusieurs endroits dans la fibre optique (60).

13. Dispositif (100 - 104) configuré pour l'exécution d'un procédé selon l'une des revendications 1 à 12, pour la détermination avec le bon signe d'une variation d'un paramètre ($\Delta\varepsilon$, $\Delta T$), comprenant :

    - une fibre optique (60), qui comprend, dans au moins une portion, des diffuseurs de Rayleigh ;
    - un laser à onde continue (10) couplé avec la fibre optique (60), pour la production d'un signal laser au moins sensiblement cohérent ;
    - un modulateur (50), disposé entre le laser à onde continue (10) et la fibre optique (60) pour la conversion du signal laser en impulsions optiques ($\Pi_p$) ;
    - un générateur de signaux (20) comprenant une première sortie de signaux reliée avec l'entrée de commande du modulateur (50), pour l'émission de signaux par impulsions pour la conversion du signal laser en impulsions optiques ($\Pi_p$) et une deuxième sortie de signaux, reliée avec le laser à onde continue (10), pour l'émission d'un signal de commande variant de manière partiellement monotone pour un courant d'alimentation (i) du laser à onde continue (10) et/ou une unité de régulation de température du laser à onde continue (10) ; et
    - une unité de détection (64, 70, 40) couplée avec la fibre optique (60), pour la mesure de puissance de rétrodiffusion de Rayleigh ($I(t_s, t_z)$) respectives pour les impulsions optiques ($\Pi_p$) se propageant dans la fibre optique (60).

**14.** Dispositif (100 - 104) selon la revendication 13, dans lequel une longueur de cohérence du signal laser dans la fibre optique (60) et/ou des impulsions optiques ($\Pi_p$) dans la fibre optique (60) est d'au moins 10 m, dans lequel le laser à onde continue (10) est une diode laser, dans lequel les signaux d'impulsions comprennent des impulsions rectangulaires ou des impulsions de Gauss, dans lequel le signal de commande est un signal partiellement linéaire et/ou un signal oscillant, dans lequel le signal de commande est un signal en dents de scie, un signal triangulaire ou un signal sinusoïdal, dans lequel les signaux d'impulsions sont corrélés de manière temporelle avec le signal de commande, dans lequel l'unité de détection (64, 70, 40) est conçue pour déterminer, avec une résolution spatiale, les puissances de rétrodiffusion de Rayleigh ($I(t_s, t_z)$) respectives dans la fibre optique (60), dans lequel la portion et/ou la fibre optique (60) présente une longueur d'au moins 10 m, dans lequel les fibres optiques (60) sont incorporées partiellement dans un objet à surveiller, plus particulièrement un ouvrage de construction et/ou un câble d'un réseau électrique et/ou sont fixées à l'objet et/ou dans lequel l'unité de détection (64, 70, 40) comprend un pré-amplificateur optique (62), un filtre optique (64), une photodiode (70), une photodiode à avalanche et/ou un convertisseur analogique-numérique (40) relié avec une sortie de signal déclencheur du générateur de signaux.

**15.** Dispositif (100 - 104) selon la revendication 13 ou 14, comprenant en outre une unité de commande et d'analyse (80), qui est couplée avec le générateur de signaux (20), qui est couplée avec l'unité de détection (64, 70, 40) et/ou qui est conçue pour exécuter un procédé selon l'une des revendications 1 à 12.

# FIG 1

# FIG 2

FIG 3A

FIG 3B

FIG 4

FIG 5

EP 3 765 824 B1

FIG 6A

FIG 6B

FIG 7A

FIG 7B

FIG 7C

EP 3 765 824 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Chirped-pulse coherent-OTDR with predistortion. **JI XIONG et al.** JOURNAL OF OPTICS. INSTITUTE OF PHYSICS PUBLISHING, 25. Januar 2018, vol. 20, 34001

- **JUAN PASTOR-GRAELLS et al.** Chirped-Pulse Phase-Sensitive Reflectometer Assisted by First-Order Raman Amplification. *JOURNAL OF LIGHTWAVE TECHNOLOGY,* 01. November 2017, vol. 35 (21), 4677-4683